(19) Europäisches Patentamt
European Patent Office
Office européen des brevets

(11) **EP 1 472 548 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(21) Anmeldenummer: **03704224.9**

(22) Anmeldetag: **17.01.2003**

(51) Int Cl.:
**G01R 19/12** *(2006.01)*

(86) Internationale Anmeldenummer:
**PCT/DE2003/000123**

(87) Internationale Veröffentlichungsnummer:
**WO 2003/067238 (14.08.2003 Gazette 2003/33)**

(54) **SCHALTKREIS-ANORDNUNG, ELEKTROCHEMISCHER SENSOR, SENSOR-ANORDNUNG UND VERFAHREN ZUM VERARBEITEN EINES ÜBER EINE SENSOR-ELEKTRODE BEREITGESTELLTEN STROMSIGNALS**

SWITCHING CIRCUIT SYSTEM, ELECTROCHEMICAL SENSOR, SENSOR SYSTEM, AND METHOD FOR PROCESSING A CURRENT SIGNAL MADE AVAILABLE VIA A SENSOR ELECTRODE

CIRCUIT, CAPTEUR ELECTROCHIMIQUE, SYSTEME SENSIBLE ET PROCEDE POUR TRAITER UN SIGNAL ELECTRIQUE FOURNI PAR L'INTERMEDIAIRE D'UNE ELECTRODE SENSIBLE

(84) Benannte Vertragsstaaten:
**DE FR GB**

(30) Priorität: **05.02.2002 DE 10204652**

(43) Veröffentlichungstag der Anmeldung:
**03.11.2004 Patentblatt 2004/45**

(73) Patentinhaber: **Siemens Aktiengesellschaft
80333 Munich (DE)**

(72) Erfinder:
- **FREY, Alexander
  82024 Taufkirchen (DE)**
- **PAULUS, Christian
  82362 Weilheim (DE)**
- **SCHIENLE, Meinrad
  85521 Ottobrunn (DE)**
- **THEWES, Roland
  82194 Gröbenzell (DE)**

(74) Vertreter: **Viering, Jentschura & Partner
Postfach 22 14 43
80504 München (DE)**

(56) Entgegenhaltungen:
**EP-A- 0 634 611          US-A- 3 711 779
US-A- 4 199 728**

- **BRETEN M ET AL: "Integrating data converters for picoampere currents from electrochemical transducers" IEEE INTERNAT. SYMPOSIUM ON CIRCUITS AND SYSTEMS, Bd. 5, 28. - 31. Mai 2000, Seiten 709-712, XP010504295**
- **R. THEWES ET AL.: "Sensor arrays for fully-electronic DNA detection on CMOS" SOLID STATE CIRCUITS CONFERENCE, DIGEST OF TECHNICAL PAPERS. ISSCC. 2002 IEEE INTERNATIONAL, Bd. 2, 3. - 7. Februar 2002, Seite 350 - 351+472 XP002248967**

**Beschreibung**

Die Erfindung betrifft eine Schaltkreis-Anordnung, einen elektrochemischen Sensor, eine Sensor-Anordnung und ein Verfahren zum Verarbeiten eines über eine Sensor-Elektrode bereitgestellten Stromsignals.

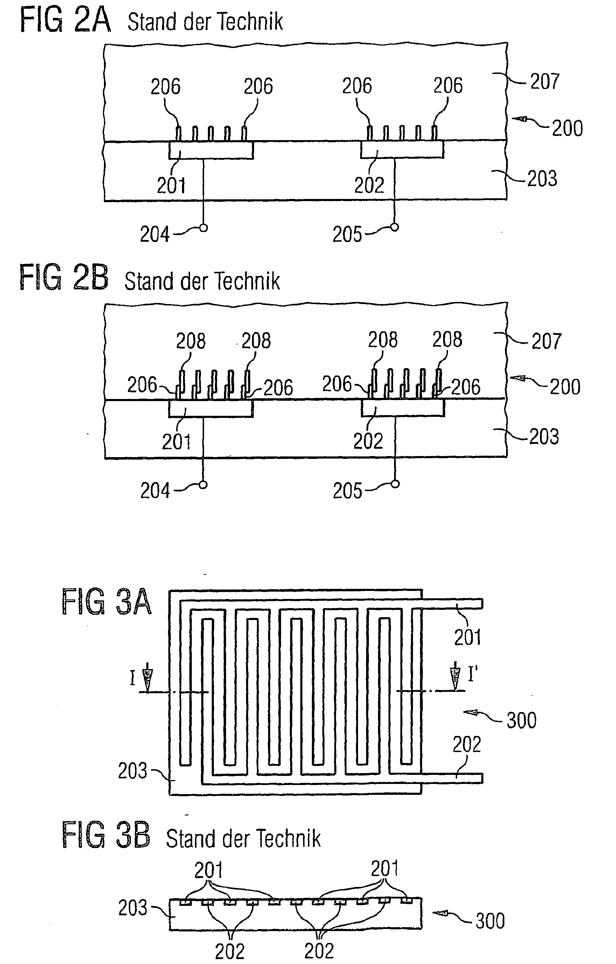

In **Fig.2A, Fig.2B** ist ein Biosensorchip gezeigt, wie er in [1] beschrieben ist. Der Sensor 200 weist zwei Elektroden 201, 202 aus Gold auf, die in einer Isolatorschicht 203 aus elektrisch isolierendem Material eingebettet sind. An die Elektroden 201, 202 sind Elektrodenanschlüsse 204, 205 angeschlossen, mittels derer das elektrische Potential an der Elektrode 201, 202 angelegt werden kann. Die Elektroden 201, 202 sind als Planarelektroden ausgestaltet. Auf jeder Elektrode 201, 203 sind DNA-Sondenmoleküle 206 (auch als Fängermoleküle bezeichnet) immobilisiert (vgl. **Fig. 2A**). Die Immobilisierung erfolgt gemäß der Gold-Schwefel-Kopplung. Auf den Elektroden 201, 202 ist der zu untersuchende Analyt, beispielsweise ein Elektrolyt 207, aufgebracht.

Sind in dem Elektrolyt 207 DNA-Stränge 208 mit einer Basensequenz enthalten, die zu der Sequenz der DNA-Sondenmoleküle 206 komplementär ist, d.h., die zu den Fängermolekülen gemäß dem Schlüssel-Schloss-Prinzip sterisch passen, so hybridisieren diese DNA-Stränge 208 mit den DNA-Sondenmolekülen 206 (vgl. **Fig.2B**).

Eine Hybridisierung eines DNA-Sondenmoleküls 206 und eines DNA-Strangs 208 findet nur dann statt, wenn die Sequenzen des jeweiligen DNA-Sondenmoleküls und des entsprechenden DNA-Strangs 208 zueinander komplementär sind. Ist dies nicht der Fall, so findet keine Hybridisierung statt. Somit ist ein DNA-Sondenmolekül einer vorgegebenen Sequenz jeweils nur in der Lage, einen bestimmten, nämlich den DNA-Strang mit jeweils komplementärer Sequenz, zu binden, d.h. mit ihm zu hybridisieren, woraus der hohe Grad an Selektivität des Sensors 200 resultiert.

Findet eine Hybridisierung statt, so verändert sich, wie aus Fig.2B ersichtlich, der Wert der Impedanz zwischen den Elektroden 201 und 202. Diese veränderte Impedanz wird mittels Anlegens einer geeigneten elektrischen Spannung an die Elektrodenanschlüsse 204, 205 und mittels Erfassens des daraus resultierenden Stroms detektiert.

Im Falle einer Hybridisierung verändert sich die Impedanz zwischen den Elektroden 201, 202. Dies ist darauf zurückzuführen, dass sowohl die DNA-Sondenmoleküle 206 als auch die DNA-Stränge 208, die möglicherweise mit den DNA-Sondenmolekülen 206 hybridisieren, elektrisch schlechter leitend sind als der Elektrolyt 207 und somit anschaulich die jeweilige Elektrode 201, 202 teilweise elektrisch abschirmen.

Zur Verbesserung der Messgenauigkeit ist es aus [2] bekannt, eine Mehrzahl von Elektrodenpaaren 201, 202 zu verwenden und diese parallel zueinander anzuordnen, wobei diese anschaulich miteinander verzahnt angeordnet sind, so dass sich eine sogenannte Interdigitalelektrode 300 ergibt, deren Draufsicht in **Fig.3A** und deren Querschnittsansicht entlang der Schnittlinie I-I' aus **Fig.3A** in **Fig.3B** gezeigt ist.

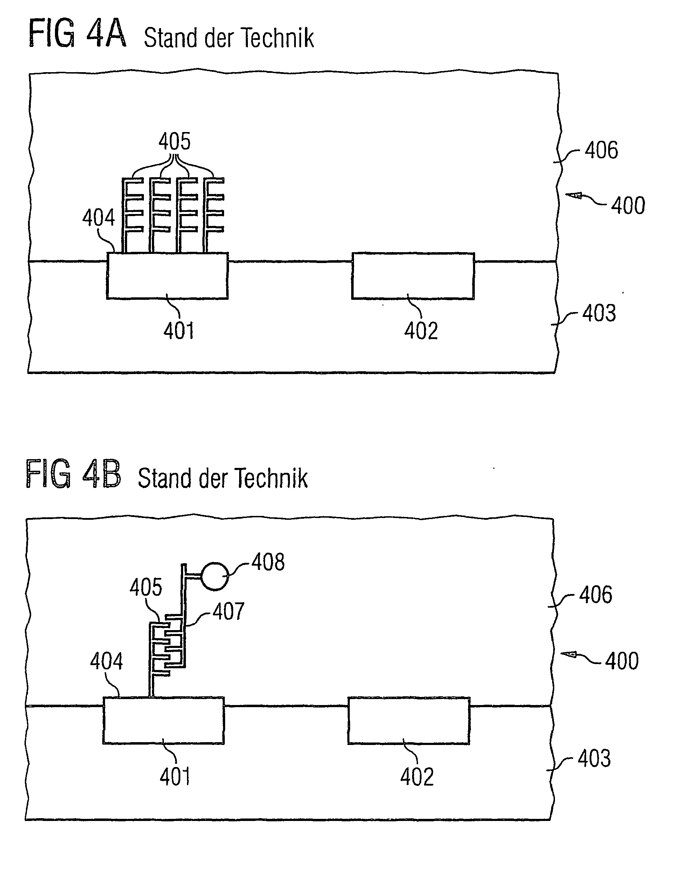

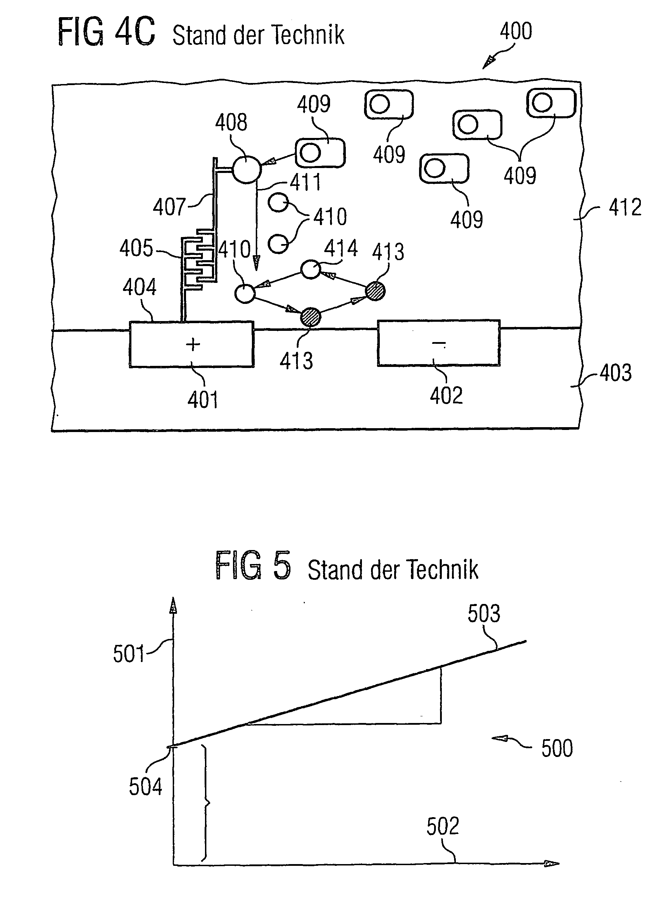

Weiterhin sind Grundlagen über einen Reduktions-/Oxidations-Recycling-Vorgang zum Erfassen makromolekularer Biomoleküle, beispielsweise aus [1], [3] bekannt. Der Reduktions-/Oxidations-Recycling-Vorgang, im Weiteren auch als Redox-Recycling-Vorgang bezeichnet, wird im Weiteren anhand **Fig.4A**, **Fig.4B, Fig.4C** näher erläutert.

In **Fig.4A** ist ein Biosensor 400 mit einer ersten Elektrode 401 und einer zweiten Elektrode 402 gezeigt, die auf einer Isolatorschicht 403 aufgebracht sind. Auf der ersten Elektrode 401 als Gold ist ein Haltebereich 404 aufgebracht. Der Haltebereich 404 dient zum Immobilisieren von DNA-Sondenmolekülen 405 auf der ersten Elektrode 401. Auf der zweiten Elektrode 402 ist ein solcher Haltebereich nicht vorgesehen.

Sollen mittels des Biosensors 400 DNA-Stränge 407 mit einer Sequenz, die komplementär ist zu der Sequenz der immobilisierten DNA-Sondenmoleküle 405 erfasst werden, so wird der Sensor 400 mit einer zu untersuchenden Lösung, beispielsweise einem Elektrolyt 406, in Kontakt gebracht derart, dass in der zu untersuchenden Lösung 406 eventuell enthaltene DNA-Stränge 407 mit der komplementären Sequenz zu der Sequenz der DNA-Sondenmoleküle 405 hybridisieren können.

**Fig.4B** zeigt den Fall, dass in der zu untersuchenden Lösung 406 die zu erfassenden DNA-Stränge 407 enthalten sind und mit den DNA-Sondenmolekülen 405 hybridisiert sind.

Die DNA-Stränge 407 in der zu untersuchenden Lösung sind mit einem Enzym 408 markiert, mit dem es möglich ist, im Weiteren beschriebene Moleküle in Teilmoleküle zu spalten, von denen mindestens eines redox-aktiv ist. Üblicherweise ist eine erheblich größere Anzahl von DNA-Sondenmolekülen 405 bereitgestellt, als zu ermittelnde DNA-Stränge 407 in der zu untersuchenden Lösung 406 enthalten sind.

Nachdem die in der zu untersuchenden Lösung 406 möglicherweise enthaltenen DNA-Stränge 407 samt dem Enzym 408 mit den immobilisierten DNA-Sondenmolekülen 405 hybridisiert sind, erfolgt eine Spülung des Biosensors 400, wodurch die nicht hybridisierten DNA-Stränge entfernt werden und der Biosensorchip 400 von der zu untersuchenden Lösung 406 gereinigt wird. Der zur Spülung verwendeten Spüllösung oder einer in einer weiteren Phase eigens zugeführten weiteren Lösung wird eine elektrisch ungeladene Substanz beigegeben, die Moleküle enthält, die mittels des Enzyms 408 an den hybridisierten DNA-Strängen 407 gespalten werden können, in ein erstes Teilmolekül 410 und in ein zweites. Eines der beiden Moleküle ist redox-aktiv.

Die beispielsweise negativ-geladenen ersten Teilmoleküle 410 werden, wie in **Fig.4C** gezeigt, zu der positiv geladenen ersten Elektrode 401 gezogen, was mittels des Pfeils 411 in Fig.4C angedeutet ist. Die negativ geladenen ersten Teilmoleküle 410 werden an der ersten Elektrode 401, die ein positives elektrisches Potential aufweist, oxidiert und werden als oxidierte Teilmoleküle 413 an die negativ geladene zweite Elektrode 402 gezogen, wo sie wieder reduziert werden. Die reduzierten Teilmoleküle 414 wiederum wandern zu der positiv geladenen ersten Elektrode 401. Auf diese Weise wird ein elektrischer Kreisstrom generiert, der proportional ist zu der Anzahl der jeweils mittels der Enzyme 406 erzeugten Ladungsträger.

Der elektrische Parameter, der bei dieser Methode ausgewertet wird, ist die Änderung des elektrischen Stroms $m=dI/dt$ als Funktion der Zeit t, wie dies in dem Diagramm 500 in Fig.5 schematisch dargestellt ist.

**Fig.5** zeigt die Funktion des elektrischen Stroms 501 in Abhängigkeit von der Zeit 502. Der sich ergebende Kurvenverlauf 503 weist einen Offsetstrom $I_{offset}$ 504 auf, der unabhängig ist von dem zeitlichen Verlauf. Der Offsetstrom $I_{offset}$ 504 wird erzeugt aufgrund von Nichtidealitäten des Biosensors 400. Eine wesentliche Ursache für den Offsetstrom $I_{offset}$ liegt darin, dass die Bedeckung der ersten Elektrode 401 mit den DNA-Sondenmolekülen 405 nicht ideal, d.h. nicht vollständig dicht erfolgt. Im Falle einer vollständig dichten Bedeckung der ersten Elektrode 401 mit den DNA-Sondenmolekülen 405 ergebe sich aufgrund der sogenannten Doppelschichtkapazität, die durch die immobilisierten DNA-Sondenmoleküle 405 entsteht, zwischen der ersten Elektrode 401 und der elektrisch leitenden, zu untersuchenden Lösung 406 eine im Wesentlichen kapazitive elektrische Kopplung. Die nicht vollständige Bedeckung führt jedoch zu parasitären Strompfaden zwischen der ersten Elektrode 401 und der zu untersuchenden Lösung 406, die unter anderem auch ohmsche Anteile aufweisen.

Um jedoch den Oxidations-/Reduktions-Prozess zu ermöglichen, soll die Bedeckung der ersten Elektrode 401 mit den DNA-Sondenmolekülen 405 gar nicht vollständig sein, damit die elektrisch geladenen Teilmoleküle, d.h. die negativ geladenen ersten Teilmoleküle 410 zu der ersten Elektrode 401 infolge einer elektrischen Kraft sowie durch Diffusionsprozesse gelangen können. Um andererseits eine möglichst große Sensitivität eines solchen Biosensors zu erreichen, und um simultan möglichst geringe parasitäre Effekte zu erreichen, sollte die Bedeckung der ersten Elektrode 401 mit DNA-Sondenmolekülen 405 ausreichend dicht sein. Um eine hohe Reproduzierbarkeit der mit einem solchen Biosensor 400 bestimmten Messwerte zu erreichen, sollen beide Elektroden 401,402 stets ein hinreichend großes Flächenangebot für den Oxidations-/Reduktions-Prozess im Rahmen des Redox-Recycling-Vorgangs bereitstellen.

Unter makromolekularen Biomolekülen sind beispielsweise Proteine oder Peptide oder auch DNA-Stränge einer jeweils vorgegebenen Sequenz zu verstehen. Sollen als makromolekulare Biomoleküle, Proteine oder Peptide erfasst werden, so sind die ersten Moleküle und die zweiten Moleküle Liganden, beispielsweise Wirkstoffe mit einer möglichen Bindungsaktivität, welche die zu erfassenden Proteine oder Peptide an die jeweilige Elektrode binden, auf der die entsprechenden Liganden angeordnet sind.

Als Liganden können Enzymagonisten, Pharmazeutika, Zucker oder Antikörper verwendet werden oder irgendein anderes Molekül, das die Fähigkeit aufweist, Proteine oder Peptide spezifisch zu binden.

Werden als makromolekulare Biomoleküle DNA-Stränge einer vorgegebenen Sequenz verwendet, die mittels des Biosensors erfasst werden sollen, so können mittels des Biosensors DNA-Stränge einer vorgegebenen Sequenz mit DNA-Sondenmolekülen mit der zu der Sequenz der DNA-Stränge komplementären Sequenz als Moleküle auf der ersten Elektrode hybridisiert werden.

Unter einem Sondenmolekül(auch Fängermolekül genannt) ist ein Ligand oder ein DNA-Sondenmolekül zu verstehen.

Der oben eingeführte Wert $m=dI/dt$, welcher der Steigung der Geraden 503 aus **Fig.5** entspricht, hängt von der Länge sowie der Breite der zur Erfassung des Mess-Stroms verwendeten Elektroden ab. Daher ist der Wert m näherungsweise proportional zur Längsausdehnung der verwendeten Elektroden, beispielsweise bei der ersten Elektrode 201 und der zweiten Elektrode 202 proportional zu deren Länge senkrecht zur Zeichenebene in **Fig.2A** und **Fig.2B**. Sind mehrere Elektroden parallel geschaltet, beispielsweise in der bekannten Interdigitalelektroden-Anordnung (vgl. **Fig.3A, Fig.3B**), so ist die Änderung des Mess-Stroms proportional zur Anzahl der jeweils parallel geschalteten Elektroden.

Der Wert der Änderung des Mess-Stroms kann jedoch aufgrund unterschiedlicher Einflüsse einen sehr stark schwankenden Wertebereich aufweisen, wobei der von einem Sensor detektierbare Strom-Bereich als Dynamikbereich bezeichnet wird. Häufig wird als wünschenswerter Dynamikbereich ein Stromstärke-Bereich von fünf Dekaden genannt. Ursachen für die starken Schwankungen können neben der Sensor-Geometrie auch biochemische Randbedingungen sein. So ist es möglich, dass zu erfassende makromolekulare Biomoleküle unterschiedlicher Typen stark unterschiedliche Wertebereiche für das sich ergebende Mess-Signal, d.h. insbesondere den Mess-Strom und dessen zeitliche Änderung bewirken, was wiederum zu einer Ausweitung des erforderlichen gesamten Dynamikbereichs mit entsprechenden Anforderungen für eine vorgegebene Elektrodenkonfiguration mit nachfolgender einheitlicher Mess-Elektronik führt.

Die Anforderungen an den großen Dynamikbereich einer solchen Schaltung führen dazu, dass die Messelektronik teuer und kompliziert ausgestaltet ist, um in dem erforderlichen Dynamikbereich ausreichend genau und zuverlässig zu arbeiten.

Ferner ist häufig der Offsetstrom $I_{offset}$ viel größer als die zeitliche Änderung des Mess-Stroms m über die gesamte Messdauer hinweg. In einem solchen Szenario muss innerhalb eines großen Signals eine sehr kleine zeitabhängige Änderung mit hoher Genauigkeit gemessen werden. Dies stellt sehr hohe Anforderungen an die eingesetzten Messinstrumente, was das Erfassen des Mess-Stroms aufwändig, kompliziert und teuer gestaltet. Auch wirkt diese Tatsache einer angestrebten Miniaturisierung von Sensor-Anordnungen entgegen.

Zusammenfassend sind die Anforderungen an den Dynamikbereich und daher an die Güte einer Schaltung zum Detektieren von Sensor-Ereignissen ausgesprochen hoch.

Es ist bekannt, beim Schaltungsdesign die Nicht-Idealitäten der verwendeten Bauelemente (Rauschen, Parametervariationen) in der Form zu berücksichtigen, dass für diese Bauelemente in der Schaltung ein Arbeitspunkt gewählt wird, in dem diese Nichtidealitäten eine möglichst vernachlässigbare Rolle spielen.

Sofern eine Schaltung über einen großen Dynamikbereich betrieben werden soll, wird die Einhaltung eines optimalen Arbeitspunkts über alle Bereiche hinweg jedoch zunehmend schwieriger, aufwändiger und damit teurer.

Kleine Signalströme, wie sie beispielsweise an einem Sensor anfallen, können mit Hilfe von Verstärkerschaltungen auf ein Niveau angehoben werden, das eine Weiterleitung des Signalstroms beispielsweise an ein externes Gerät oder eine interne Quantifizierung erlaubt.

Aus Gründen der Störungssicherheit sowie der Benutzerfreundlichkeit ist eine digitale Schnittstelle vom Sensor zum auswertenden System vorteilhaft. Die analogen Mess-Ströme sollen also bereits in der Nähe des Sensors in digitale Signale gewandelt werden, was mittels eines integrierten Analog-Digital-Wandlers (ADC) erfolgen kann. Ein solches integriertes Konzept zum Digitalisieren eines analogen, kleinen Stromsignals ist beispielsweise in [4] beschrieben.

Um den erforderlichen Dynamikbereich zu erreichen, sollte der ADC eine entsprechend große Auflösung und ein ausreichend hohes Signal-Rausch-Verhältnis aufweisen. Das Integrieren eines derartigen Analog-Digital-Wandlers in unmittelbarer Nähe einer Sensor-Elektrode stellt ferner eine hohe technologische Herausforderung dar, die entsprechende Prozessführung ist aufwändig und teuer. Ferner ist das Erreichen eines ausreichend hohen Signal-Rausch-Verhältnisses in dem Sensor außerordentlich schwierig.

Der Erfindung liegt das Problem zugrunde, eine fehlerrobuste Schaltkreis-Anordnung mit einer verbesserten Nachweisempfindlichkeit für zeitlich sehr schwach veränderliche elektrische Ströme zu schaffen.

Das Problem wird durch eine Schaltkreis-Anordnung, einen elektrochemischen Sensor, eine Sensor-Anordnung und ein Verfahren zum Verarbeiten eines über eine Sensor-Elektrode bereitgestellten Stromsignals mit den Merkmalen gemäß den unabhängigen Patentansprüchen gelöst.

Erfindungsgemäß ist eine Schaltkreis-Anordnung mit einer Sensor-Elektrode, mit einer ersten Schaltungseinheit, die mit der Sensor-Elektrode elektrisch gekoppelt ist und mit einer zweiten Schaltungseinheit, die einen ersten Kondensator aufweist, bereitgestellt. Die erste Schaltungseinheit ist derart eingerichtet, dass sie das elektrische Potential der Sensor-Elektrode in einem vorgebbaren ersten Referenz-Bereich um ein vorgebbares elektrisches Soll-Potential hält, indem der erste Kondensator und die Sensor-Elektrode derart gekoppelt werden, dass ein Angleichen des elektrischen Potentials ermöglicht ist. Die zweite Schaltungseinheit ist derart eingerichtet, dass sie, wenn das elektrische Potential des ersten Kondensators außerhalb eines zweiten Referenz-Bereichs ist, dieses Ereignis detektiert und den ersten Kondensator auf ein erstes elektrisches Referenz-Potential bringt.

Im Weiteren wird die Funktionalität der erfindungsgemäßen Schaltkreis-Anordnung anschaulich erläutert. Die Schaltkreis-Anordnung der Erfindung weist eine Sensor-Elektrode auf, an der ein Sensor-Ereignis stattfinden kann. Beispielsweise kann an der Sensor-Elektrode ein Hybridisierungs-Ereignis von in einer zu untersuchenden Flüssigkeit enthaltenen DNA-Halbsträngen mit auf der Sensor-Elektrode immobilisierten Fängermolekülen erfolgen. Weisen die zu erfassenden Moleküle beispielsweise ein Enzym-Label auf, das freie elektrische Ladungsträger in der zu untersuchenden Flüssigkeit erzeugt, so fließt ausgehend von der Sensor-Elektrode in die Schaltkreis-Anordnung der Erfindung ein zu detektierendes elektrisches Strom-Signal. Die erste Schaltungseinheit der Schaltkreis-Anordnung ist derart eingerichtet, dass diese anschaulich das elektrische Potential der Sensor-Elektrode innerhalb eines ersten Referenz-Bereichs hält. Solange das elektrische Potential der Sensor-Elektrode innerhalb dieses Referenz-Bereichs ist, entkoppelt die erste Schaltungseinheit die Sensor-Elektrode von einem Kondensator der zweiten Schaltungseinheit. Gerät das elektrische Potential der Sensor-Elektrode außerhalb des ersten Referenz-Bereichs, so stellt die erste Schaltungseinheit eine graduelle elektrische Kopplung zwischen der Sensor-Elektrode und dem ersten Kondensator der zweiten Schaltungseinheit her. Infolge dieser elektrischen Kopplung ist ein Angleichen des elektrischen Potentials der Sensor-Elektrode mit jenem des ersten Kondensators der zweiten Schaltungseinheit ermöglicht. Anschaulich können zwischen dem Kondensator und der Sensor-Elektrode freie elektrische Ladungen hin- und her- fließen, derart, dass das elektrische Potential der Sensor-Elektrode in den ersten Referenz-Bereich zurückgeführt wird. Dadurch können sukzessive kleine Ladungsmengen ausgehend von der Sensor-Elektrode auf den ersten Kondensator der zweiten Schaltungseinheit verlagert werden oder umgekehrt. Anschaulich werden kleine Sensor-Ströme zu einem Ladungspaket auf dem Kondensator aufintegriert, bis das Ladungspaket eine vorgegebene, ausreichende Größe aufweist, um nachgewiesen zu werden. Daher ändert sich die auf dem ersten Kondensator der zweiten Schaltungseinheit befindliche Ladungsmenge in für die Anzahl der auf der Sensor-Elektrode erfolgten Sensor-Ereignisse charakteristischer Weise. Mit anderen Worten liefert der erste Kondensator der zweiten Schaltungseinheit diejenige Ladungsmenge auf die Sensor-Elektrode nach, die infolge der Sensor-Ereignisse von der Sensor-Elektrode abfließt. Daher fungieren die erste Schaltungseinheit und der Kondensator unter anderem ähnlich wie ein Potentiostat, indem sie die elektrische Spannung der Sensor-Elektrode innerhalb des ersten Referenz-Bereichs, vorzugsweise auf dem elektrischen Soll-Potential, halten.

Wenn jedoch das elektrische Potential des ersten Kondensators infolge der mit der Sensor-Elektrode ausgetauschten Ladungsträger außerhalb des zweiten Referenz-Bereichs gerät, so wird dieses Ereignis von der zweiten Schaltungseinheit detektiert, und die zweite Schaltungseinheit sorgt dafür, dass der erste Kondensator auf ein erstes elektrisches Referenz-Potential gebracht wird. Anschaulich ausgedrückt nimmt die zweite Schaltungseinheit die folgende Funktionalität wahr: Wenn eine ausreichend große Ladungsmenge von der Sensor-Elektrode dem ersten Kondensator entnommen worden ist (oder umgekehrt eine ausreichend große Ladungsmenge von der Sensor-Elektrode auf den ersten Kondensator geflossen ist), wird dieses Ereignis von der zweiten Schaltungseinheit beispielsweise mittels Ausgebens eines Pulses detektiert. Ferner wird dem ersten Kondensator die auf die Sensor-Elektrode abgeflossene elektrische Ladung nachgeliefert (oder dem ersten Kondensator die von der Sensor-Elektrode auf den ersten Kondensator geflossene elektrische Ladung entnommen), um den Kondensator wiederum auf einen definierten Arbeitspunkt, d.h. auf das erste elektrische Referenz-Potential, zurückzubringen.

Die erfindungsgemäße Schaltkreis-Anordnung mit der beschriebenen Funktionalität ist dazu geeignet, kleinste analoge elektrische Strom-Signale zu erfassen und in ein digitales Signal, d.h. eine Abfolge von zeitlich aufeinanderfolgenden, getrennten Pulsen umzuwandeln. Die Digitalisierung des analogen Mess-Signals erfolgt in unmittelbarer räumlicher Nähe zu der Sensor-Elektrode, so dass parasitäres, zusätzliches Rauschen infolge eines zeitlich wie räumlich langen Übermittlungsweges eines AnalogSignals weitgehend vermieden ist. Daher weist die erfindungsgemäße Schaltkreis-Anordnung ein hohes Signal-Rausch-Verhältnis beim Erfassen elektrischer Ströme auf.

Die erfindungsgemäße Schaltkreis-Anordnung ist insbesondere geeignet zum Detektieren eines gemäß dem Redox-Recycling-Prinzip erzeugten, sukzessive ansteigenden Strom-Signals (vgl. Fig.5). Mittels geeigneten Einstellens der Messzeit bzw. der für die Funktionalität der erfindungsgemäßen Schaltkreis-Anordnung relevanten Referenz-Bereiche des elektrischen Potentials der Sensor-Elektroden und des ersten Kondensators ist die Anzahl der zu detektierenden Ereignisse (z.B in der Form von Pulsen) flexibel auf die Bedürfnisse des Einzelfalls einstellbar.

Vorzugsweise weist die Schaltkreis-Anordnung ein mit der zweiten Schaltungseinheit elektrisch gekoppeltes Zähler-Element auf, das derart eingerichtet ist, das es die Anzahl und/oder die zeitliche Abfolge der Ereignisse zählt. Ferner kann die Schaltkreis-Anordnung derart eingerichtet sein, dass ein direktes Ausgeben der Sensorfrequenz, d.h. der Frequenz der Ereignisse, vorgesehen ist.

Gemäß einer vorteilhaften Weiterbildung ist das Zähler-Element derart eingerichtet, dass es die zeitliche Abfolge der Ereignisse in mindestens zwei Zeitintervallen in einem zeitlichen Abstand voneinander erfasst.

Mit anderen Worten werden die von der zweiten Schaltungseinheit detektierten Ereignisse, dass das elektrische Potential des ersten Kondensators außerhalb des zweiten Referenz-Bereichs gerät, mittels des Zähler-Elements gezählt, und insbesondere der zeitliche Abstand zwischen aufeinanderfolgenden Ereignissen detektiert. Das Zählen der zeitlichen Abstände der Ereignisse entspricht dem Ermitteln der Frequenz der Ereignisse. Dies bedeutet, dass das analoge Strom-Signal auf der Sensor-Elektrode in ein digitales Signal, das in der ermittelten Frequenz enthalten ist, umgewandelt ist. Dadurch ist insbesondere ein hoher Dynamikbereich der Schaltkreis-Anordnung erreichbar. Technisch ist es mit vertretbarem Aufwand möglich, beispielsweise Frequenzen zwischen 100Hz und 10MHz zu erzeugen, zu detektieren und zu verarbeiten, so dass ein Dynamikbereich von fünf und mehr Dekaden erreichbar ist.

Vorzugsweise weist die erfindungsgemäße Schaltkreis-Anordnung eine mit der ersten Schaltungseinheit koppelbare Kalibrier-Einrichtung zum Kalibrieren der Schaltkreis-Anordnung auf, die derart eingerichtet ist, dass mittels der Kalibrier-Einrichtung an die erste Schaltungseinheit ein zweites elektrisches Referenz-Potential anlegbar ist, wobei die zweite Schaltungseinheit entweder mit der Kalibrier-Einrichtung oder mit der Sensor-Elektrode gekoppelt ist.

Die Möglichkeit, erfindungsgemäß die Schaltkreis-Anordnung kalibrieren zu können, erhöht den Grad der Verlässlichkeit der erfassten Signale und ermöglicht eine Kontrolle der einwandfreien Funktionsfähigkeit der Schaltkreis-Anordnung. Ferner kann mittels einer Kalibrierungs-Einrichtung die Messgenauigkeit der Schaltkreis-Anordnung erhöht werden.

Vorzugsweise weist die erste Schaltungseinheit ein erstes Komparator-Element mit zwei Eingängen und einem Ausgang auf, wobei der erste Eingang derart mit der Sensor-Elektrode gekoppelt ist, dass der erste Eingang auf dem elektrischen Potential der Sensor-Elektrode ist, wohingegen der zweite Eingang auf ein drittes elektrisches Referenz-Potential gebracht ist, welches das elektrische Soll-Potential definiert. Das erste Komparator-Element ist derart eingerichtet, dass an dessen Ausgang ein derartiges elektrisches Signal erzeugt wird, dass, das elektrische Potential der Sensor-Elektrode in dem vorgebbaren ersten Referenz-Bereich um das vorgebbare elektrische Soll-Potential gehalten wird.

Die erste Schaltungseinheit dient zur Konstanthaltung einer vorgebbaren Spannung, hier als elektrisches Soll-Potential bezeichnet, an den Sensor-Elektroden.

Gemäß einer vorteilhaften Ausgestaltung weist bei der Schaltkreis-Anordnung die erste Schaltungs-Einheit einen veränderbaren ohmschen Widerstand auf, mittels welchem die Sensor-Elektrode mit dem ersten Kondensator der zweiten Schaltungs-Einheit derart koppelbar ist, dass das Potential der Sensor-Elektrode in dem vorgebbaren ersten Referenz-Bereich um das vorgebbare elektrische Soll-Potential gehalten wird.

Mit anderen Worten kann zum Konstanthalten des Potentials der Sensor-Elektrode die Kopplung der Sensor-Elektrode mit dem ersten Kondensator mittels eines regelbaren ohmschen Widerstands realisiert sein. Der jeweils aktuell eingestellte Wert des ohmschen Widerstands ist ein Maß für die aktuelle Stärke der elektrischen Kopplung zwischen der Sensor-Elektrode und dem ersten Kondensator.

Ferner weist die erste Schaltungseinheit vorzugsweise einen Transistor auf, dessen Gate-Bereich mit dem Ausgang des ersten Komparator-Elements gekoppelt ist, dessen erster Source-/Drain-Bereich mit der Sensor-Elektrode gekoppelt ist und dessen zweiter Source-/Drain-Bereich mit dem ersten Kondensator gekoppelt ist.

Mit anderen Worten fungiert der beschriebene Transistor als Regel-Element, der den Stromfluss zwischen der Sensor-Elektrode und dem ersten Kondensator einstellt.

Ferner kann die zweite Schaltungseinheit ein zweites Komparator-Element mit zwei Eingängen und einem Ausgang aufweisen, wobei der erste Eingang derart mit dem ersten Kondensator gekoppelt ist, dass der erste Eingang auf dem elektrischen Potential des ersten Kondensators ist, und wobei der zweite Eingang auf einem vierten elektrischen Referenz-Potential ist, das den zweiten elektrischen Referenz-Bereich definiert. Das zweite Komparator-Element ist derart eingerichtet, dass an dessen Ausgang ein derartiges elektrisches Signal erzeugt wird, dass, wenn das elektrische Potential des ersten Kondensators das vierte elektrische Referenz-Potential überschreitet, der erste Kondensator auf das erste elektrische Referenz-Potential gebracht wird.

Alternativ zu der beschriebenen Ausgestaltung weist die zweite Schaltungseinheit der Schaltkreis-Anordnung ein zweites Komparator-Element mit zwei Eingängen und einem Ausgang auf, wobei der erste Eingang derart mit dem ersten Kondensator gekoppelt ist, dass der erste Eingang auf dem elektrischen Potential des ersten Kondensators ist, wobei der zweite Eingang auf einem vierten elektrischen Referenz-Potential ist, das den zweiten elektrischen Referenz-Bereich definiert. Ferner ist das zweite Komparator-Element derart eingerichtet, dass an dessen Ausgang ein derartiges elektrisches Signal erzeugt wird, dass, wenn das elektrische Potential des ersten Kondensators das vierte elektrische Referenz-Potential unterschreitet, der erste Kondensator auf das erste elektrische Referenz-Potential gebracht wird.

Vorzugsweise ist das erste und/oder das zweite Komparator-Element ein Operationsverstärker.

Die obigen Ausführungen zeigen, dass die Elemente zum Ausbilden der erfindungsgemäßen Schaltkreis-Anordnung allesamt elektronische Standardbauteile sind, die in der Fertigung günstig sind und die mit Standardverfahren herstellbar sind. Daher ist die erfindungsgemäße Schaltkreis-Anordnung wenig aufwändig herstellbar.

Gemäß einer bevorzugten Weiterbildung der erfindungsgemäßen Schaltkreis-Anordnung weist ihre zweite Schaltungseinheit mindestens einen zweiten Kondensator auf, wobei die Schaltkreis-Anordnung derart eingerichtet ist, dass entweder einer der mindestens einen zweiten Kondensatoren oder der erste Kondensator oder mindestens zwei der Kondensatoren simultan der Schaltkreis-Anordnung zugeschaltet ist/sind.

Anschaulich weist die Schaltkreis-Anordnung mehrere parallel geschaltete Kondensatoren auf, die unterschiedliche oder gleiche Materialparameter (beispielsweise Kapazität C) aufweisen, und von denen jeweils einer oder mehrere wahlweise in die Schaltkreis-Anordnung aktiv eingeschaltet werden kann. Ein Benutzer hat daher die Möglichkeit, entsprechend der Bedürfnisse des Einzelfalls den oder die geeigneten der Kondensatoren auszuwählen, welcher oder welche hinsichtlich Messgenauigkeit und gewünschtem Dynamikbereich günstig ist oder sind. Mittels Bereitstellens unterschiedlicher Kondensatoren, von denen jeder in die Schaltkreis-Anordnung aktiv eingeschaltet werden kann, ist die Nachweisempfindlichkeit der Schaltkreis-Anordnung zum Erfassen elektrischer Ströme erhöht, und der Dynamikbereich ebenfalls erhöht.

Die erfindungsgemäße Schaltkreis-Anordnung kann als integrierter Schaltkreis ausgebildet sein.

Insbesondere kann die Schaltkreis-Anordnung der Erfindung in ein Halbleiter-Substrat (z.B einen Chip eines Silizium-Wafers) integriert sein, bzw. teilweise auf dem Halbleiter-Substrat ausgebildet sein. Infolge der Integration der Schaltkreis-Anordnung ist die Sensitivität erhöht und die Schaltkreis-Anordnung miniaturisiert. Die Miniaturisierung bewirkt einen Kostenvorteil, da makroskopisches Messequipment eingespart ist. Ferner ist die erfindungsgemäße Schaltkreis-Anordnung mittels standardisierter halbleitertechnologischer Verfahren herstellbar, was sich ebenfalls günstig auf die Herstellungskosten auswirkt. Ferner ist es infolge der Integration der Schaltkreis-Anordnung in ein Halbleiter-Substrat ermöglicht, das zu erfassende Strom-Signal On-Chip, d.h. in unmittelbarer Nähe des Sensor-Ereignisses zu verarbeiten. Kurze Übermittlungswege des Strom-Signals halten Stör-Einflüsse wie Rauschen, etc. gering, so dass ein hohes Signal-Rausch-Verhältnis erreichbar ist.

Ferner ist erfindungsgemäß ein elektrochemischer Sensor mit einer Schaltkreis-Anordnung mit den beschriebenen Merkmalen geschaffen. Der elektrochemische Sensor kann insbesondere als Redox-Recycling-Sensor ausgestaltet sein.

Wie oben bezugnehmend auf **Fig. 4A, Fig.4B, Fig.4C** beschrieben, weist ein auf dem Prinzip des Redox-Recyclings basierender Sensor eine zeitlich sukzessive ansteigende Sensor-Strom-Charakteristik auf. Ein solches, im Wesentlichen zeitlich monoton ansteigendes Stromsignal ist zum Erfassen mittels der erfindungsgemäßen Schaltkreis-Anordnung gut geeignet, da das sukzessive anwachsende Stromsignal in auf dem ersten Kondensator akkumulierte Ladungspakete zerlegbar ist, die mittels Pulsen einzeln von der erfindungsgemäßen Schaltkreis-Anordnung detektiert werden. Insbesondere ist die Nachweisempfindlichkeit der erfindungsgemäßen Schaltkreis-Anordnung ausreichend hoch, um elektrische Ströme in der Größenordnung zwischen ungefähr 1pA und ungefähr 100nA, wie sie häufig von Bio-Sensoren gemäß dem Redox-Recycling-Prinzip mit üblichen Sensor-Elektroden-Geometrien generiert werden, zu erfassen.

Darüber hinaus ist erfindungsgemäß eine Sensor-Anordnung mit einer Mehrzahl von Schaltkreis-Anordnungen mit den oben beschriebenen Merkmalen bereitgestellt.

Daher ist eine parallele Analyse, beispielsweise das parallele Erfassen unterschiedlicher DNA-Halbstränge mit einer Mehrzahl von Redox-Recycling-Sensoren, an deren Sensor-Elektroden unterschiedliche Fängermoleküle immobilisiert sind, möglich. Eine parallele Analyse einer zu untersuchenden Flüssigkeit ist ein dringendes Bedürfnis hinsichtlich vieler Anwendungen in der Bio- und Gentechnologie oder in der Lebensmitteltechnik. Eine zeitlich parallele Analyse ist zeit- und daher kostensparend. Ferner kann die Sensor-Anordnung derart eingerichtet sein, dass die einzelnen Sensorzellen (gebildet jeweils von einer Schaltkreis-Anordnung) seriell auslesbar sind.

Insbesondere kann bei der Sensor-Anordnung jede der Schaltkreis-Anordnungen als autark arbeitendes Sensor-Element eingerichtet sein.

Die Schaltkreis-Anordnungen der Sensor-Anordnung können im Wesentlichen matrixförmig, alternativ jedoch auch z.B. hexagonal, angeordnet sein.

Ferner kann die Sensor-Anordnung einen zentralen Ansteuer-Schaltkreis zum Ansteuern einer Schaltkreis-Anordnung, einen zentralen Versorgungs-Schaltkreis zum Bereitstellen von Versorgungs-Spannungen bzw. Versorgungs-Strömen und/oder einen zentralen Auslese-Schaltkreis zum Auslesen der Schaltkreis-Anordnungen aufweisen. Dieser Schaltkreis bzw. diese Schaltkreise sind vorzugsweise mit zumindest einem Teil der Schaltkreis-Anordnungen gekoppelt.

Im Weiteren wird das erfindungsgemäße Verfahren zum Verarbeiten eines über eine Sensor-Elektrode bereitgestellten Stromsignals beschrieben. Ausgestaltungen der Schaltkreis-Anordnung, des elektrochemischen Sensors und der Sensor-Anordnung gelten auch für das Verfahren zum Verarbeiten eines über eine Sensor-Elektrode bereitgestellten Stromsignals.

Das erfindungsgemäße Verfahren zum Verarbeiten eines über eine Sensor-Elektrode bereitgestellten Stromsignals erfolgt unter Verwenden einer erfindungsgemäßen Schaltkreis-Anordnung mit den oben beschriebenen Merkmalen. Gemäß dem Verfahren wird das elektrische Potential der Sensor-Elektrode in dem vorgebbaren ersten Referenz-Bereich um das vorgebbare elektrische Soll-Potential gehalten, indem der erste Kondensator und die Sensor-Elektrode derart gekoppelt werden, dass ein Angleichen des elektrischen Potentials ermöglicht ist. Ferner wird, wenn das elektrische Potential des ersten Kondensators außerhalb des zweiten Referenz-Bereichs gerät, mittels der zweiten Schaltungseinheit dieses Ereignis detektiert und der erste Kondensator auf das erste elektrische Referenz-Potential gebracht.

Gemäß einer bevorzugten Weiterbildung des erfindungsgemäßen Verfahrens wird mittels eines mit der zweiten Schaltungseinheit elektrisch gekoppelten Zähler-Elements die Anzahl und/oder die zeitliche Abfolge der Ereignisse gezählt.

Vorzugsweise wird mittels des Zähler-Elements die zeitliche Abfolge der Ereignisse in mindestens zwei Zeitintervallen in einem zeitlichen Abstand voneinander erfasst.

Ausführungsbeispiele der Erfindung sind in den Figuren dargestellt und werden im Weiteren näher erläutert.

Es zeigen:

Figur 1 eine schematische Ansicht einer Schaltkreis-Anordnung gemäß einem ersten Ausführungsbeispiel der Erfindung,

Figur 2A eine Querschnitts-Ansicht eines Sensors gemäß dem Stand der Technik in einem ersten Betriebszustand,

Figur 2B eine Querschnitts-Ansicht des Sensors gemäß dem Stand der Technik in einem zweiten Betriebszustand,

Figur 3A eine Draufsicht von Interdigitalelektroden gemäß dem Stand der Technik,

Figur 3B eine Querschnittsansicht entlang der Schnittlinie I-I' der in Figur 3A gezeigten Interdigitalelektroden gemäß dem Stand der Technik,

Figur 4A einen auf dem Prinzip des Redox-Recyclings basierenden Biosensor in einem ersten Betriebszustand gemäß dem Stand der Technik,

Figur 4B einen auf dem Prinzip des Redox-Recyclings basierenden Biosensor in einem zweiten Betriebszustand gemäß dem Stand der Technik,

Figur 4C einen auf dem Prinzip des Redox-Recyclings basierenden Biosensor in einem dritten Betriebszustand gemäß dem Stand der Technik,

Figur 5 einen Funktionsverlauf eines Sensor-Stroms im Rahmen eines Redox-Recycling-Vorgangs,

Figur 6A eine schematische Ansicht einer Schaltkreis-Anordnung gemäß einem zweiten Ausführungsbeispiel der Erfindung,

Figur 6B eine schematische Ansicht einer Schaltkreis-Anordnung gemäß einem dritten Ausführungsbeispiel der Erfindung,

Figur 7 einen Blockschaltplan einer Schaltkreis-Anordnung gemäß einem vierten Ausführungsbeispiel der Erfindung,

Figur 8 einen Blockschaltplan, der den Aufbau einer in Figur 7 gezeigten ersten Schaltungseinheit (Spannungsregler) zeigt,

Figur 9 einen weiteren Blockschaltplan, der den Aufbau des in Figur 8 gezeigten ersten Komparator-Elements zeigt,

Figur 10 einen weiteren Blockschaltplan, der den Aufbau eines in Figur 7 gezeigten zweiten Komparator-Elements zeigt,

Figur 11 einen weiteren Blockschaltplan, der den Aufbau einer Stufe des Zählers bzw. des Schieberegisters aus Figur 7 zeigt,

Figur 12 ein bevorzugtes Ausführungsbeispiel der erfindungsgemäßen Sensor-Anordnung.

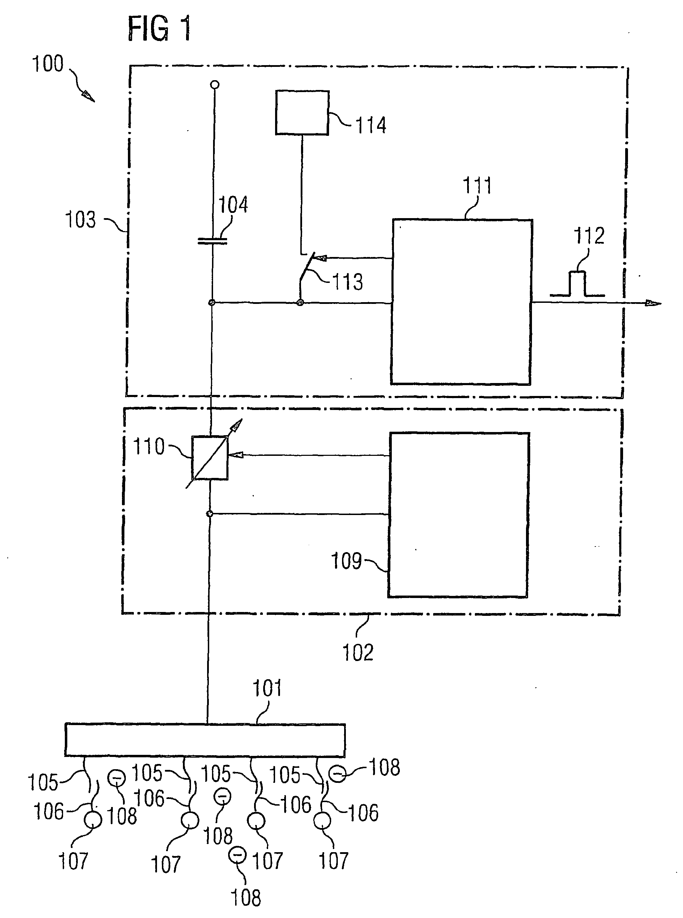

Im Weiteren wird bezugnehmend auf **Fig.1** ein erstes bevorzugtes Ausführungsbeispiel der erfindungsgemäßen Schaltkreis-Anordnung beschrieben.

Die in **Fig.1** gezeigte Schaltkreis-Anordnung 100 weist eine Sensor-Elektrode 101, eine erste Schaltungseinheit 102, die mit der Sensor-Elektrode 101 elektrisch gekoppelt ist und eine zweite Schaltungseinheit 103, die einen ersten Kondensator 104 aufweist, auf. Die erste Schaltungseinheit 102, anschaulich ein Potentiostat, ist derart eingerichtet, dass sie das elektrische Potential der Sensor-Elektrode 101 in einem vorgebbaren ersten Referenz-Bereich um ein vorgebbares elektrisches Soll-Potential hält, indem der erste Kondensator 104 und die Sensor-Elektrode 101 derart gekoppelt werden, dass ein Angleichen des elektrischen Potentials (mittels eines Stromflusses zum Regeln) ermöglicht ist. Ferner ist die zweite Schaltungseinheit 103 derart eingerichtet, dass sie, wenn das elektrische Potential des ersten Kondensators 104 außerhalb eines zweiten Referenz-Bereichs ist, dieses Ereignis detektiert und den ersten Kondensator 104 auf ein erstes elektrisches Referenz-Potential bringt.

Wie ferner in **Fig.1** gezeigt, sind an der Oberfläche der Sensor-Elektrode 101 Fängermoleküle 105 immobilisiert. Die Fängermoleküle 105 aus **Fig.1** haben mit zu erfassenden Molekülen 106 hybridisiert, wobei jedes der zu erfassenden Moleküle 106 ein Enzymlabel 107 aufweist.

Die in **Fig.1** gezeigte Sensor-Elektrode 101 mit den daran immobilisierten Fängermolekülen funktioniert nach dem Prinzip des Redox-Recyclings (vgl. **Fig.4A, Fig.4B, Fig.4C).** Daher sind in **Fig.1** elektrisch geladene Partikel 108 gezeigt, welche mittels der Enzymlabel 107 in der zu untersuchenden Flüssigkeit erzeugt werden, und welche einen elektrischen Sensor-Strom erzeugen, der von der ersten Sensor-Elektrode 101 aus in die Schaltkreis-Anordnung 100 eingekoppelt wird.

Dieser Sensor-Strom verändert das elektrische Potential der Sensor-Elektrode 101 in charakteristischer Weise. Dieses elektrische Potential liegt am Eingang einer ersten Regelungs-Einheit 109 der ersten Schaltungseinheit 102 an. Die erste Schaltungseinheit 102 und insbesondere die erste Regelungs-Einheit 109 sorgen dafür, dass die Sensor-Elektrode 101 auf einem vorgebbaren, konstanten elektrischen Potential verbleibt, indem bei einem ausreichend starken Abweichen des Sensor-Elektroden-Potentials von dem elektrischen Soll-Potential eine Verschiebung von Ladungsträgern zwischen dem ersten Kondensator 104 und der Sensor-Elektrode 101 durchgeführt wird. Dies ist in **Fig.1** schematisch mittels des regelbaren ohmschen Widerstands 110, der von der ersten Regelungs-Einheit 109 regelbar ist, angedeutet. Der gezeigte Schaltungsblock ist ein analoger Regelkreis, der den Stromfluss zwischen dem Kondensator 104 und der Sensor-Elektrode 101 so regelt, daß die Spannung an der Sensor-Elektrode 101 konstant bleibt. Mittels des steuerbaren Widerstands 110 ist eine kontinuierliche Regelung des Stromflusses ermöglicht. Gerät das elektrische Potential der Sensor-Elektrode 101 infolge einer ausreichend großen Anzahl von Sensor-Ereignissen an deren Oberfläche außerhalb des ersten Referenz-Bereichs, so sorgt die erste Schaltungseinheit 102 und insbesondere die erste Regelungs-Einheit 109 dafür, dass der Stromfluss zwischen der Sensor-Elektrode 101 und dem ersten Kondensator 104 zunimmt bzw. abnimmt, so dass zwischen dem ersten Kondensator 104 und der Sensor-Elektrode 101 ein Angleichen des elektrischen Potentials ermöglicht ist. Anschaulich wird dadurch mittels der ersten Regelungs-Einheit 109 der ersten Schaltungseinheit 102 der Widerstandswert des steuerbaren Widerstandes 110 erhöht bzw. erniedrigt, so dass ein Stromfluss zwischen der Sensor-Elektrode 101 und dem ersten Kondensator 104 ermöglicht ist. In diesem Szenario kann elektrische Ladung zwischen dem ersten Kondensator 104 und der Sensor-Elektrode 101 hin- und her- fließen.

Wenn infolge dieser Ladungsverschiebung das elektrische Potential des ersten Kondensators 104 außerhalb eines zweiten Referenz-Bereichs gerät, so wird dieses Ereignis von der zweiten Schaltungseinheit 103 und insbesondere von einer zweiten Regelungs-Einheit 111, die vorzugsweise einen Komparator aufweist, der zweiten Schaltungseinheit 103 detektiert. Wie in **Fig.1** gezeigt, kann dieses Detektieren darin bestehen, dass an einem Ausgang der zweiten Regelungs-Einheit 111 ein elektrischer Puls 112 generiert wird.

Ferner wird, wenn das elektrische Potential des ersten Kondensators 104 außerhalb des zweiten Referenz-Bereichs gerät, mittels der zweiten Schaltungseinheit 103 und insbesondere mittels der zweiten Regelungs-Einheit 111 der zweiten Schaltungseinheit 103 der erste Kondensator 104 auf das erste elektrische Referenz-Potential gebracht. Dies ist in **Fig.1** dadurch angedeutet, dass ein weiterer Schalter 113 infolge eines von der zweiten Regelungs-Einheit 111 der zweiten Schaltungseinheit 103 ausgelösten Signals geschlossen wird, wodurch der erste Kondensator 104 mit einer Spannungsquelle 114 elektrisch gekoppelt wird, wodurch der erste Kondensator 104 auf das erste elektrische Referenz-Potential gebracht wird, das mittels der Spannungsquelle 114 definiert ist.

Eine Grundidee der erfindungsgemäßen Schaltkreis-Anordnung kann anschaulich darin gesehen werden, dass ein zu erfassender Sensor-Strom ohne eine vorherige analoge Verstärkung in eine dem Strom proportionale Frequenz überführt wird. Mittels der erfindungsgemäßen Schaltkreis-Anordnung wird das Potential an der Sensor-Elektrode konstant gehalten und die hierfür erforderliche elektrische Ladung (positiven oder negativen Vorzeichens) einem Kondensator mit der Kapazität C entnommen. Infolge der Ladungsentnahme $\Delta Q$

$$\Delta Q = \int I\,dt \qquad (1)$$

aufgrund eines Stromflusses I zwischen dem ersten Kondensator und der Sensor-Elektrode integriert über die Zeit t, ändert sich die an dem ersten Kondensator anliegende Spannung $\Delta U$ gemäß der Beziehung

$$\Delta Q = C\Delta U \qquad (2)$$

Die an dem Kondensator anliegende Spannung wird mittels einer Schwellwertschaltung überwacht. Wird ein bestimmter Wert über- oder unterschritten, so löst die Schaltung einen digitalen Impuls aus, mittels dem ein Schalter geschlossen wird, wodurch die elektrische Spannung an dem Kondensator auf einen vorgegebenen Wert zurückgesetzt wird. Als Resultat erhält man im Messbetrieb eine Impulsfolge aus der Schwellwertschaltung, deren Frequenz proportional zu dem Signal-Strom ist.

Wie oben bezugnehmend auf **Fig.1** beschrieben, weist die erfindungsgemäße Schaltkreis-Anordnung zum Betrieb eines elektrochemischen Sensors im Wesentlichen zwei Schaltungseinheiten auf. Die erste Schaltungseinheit kontrolliert das elektrische Potential (d.h. die Spannung gegenüber einem Bezugspunkt), das an der Sensor-Elektrode anliegt. Beispielsweise kann ein Operationsverstärker dazu verwendet werden, das elektrische Potential der Sensor-Elektrode mit einem Referenz-Potential zu vergleichen, und den elektrischen Stromfluss zwischen der Sensor-Elektrode und dem ersten Kondensator derart zu regeln, dass das elektrische Potential der Sensor-Elektrode konstant bleibt.

Der zum Angleich des Sensor-Stroms erforderliche Gegenstrom wird, wie beschrieben, dem ersten Kondensator der zweiten Schaltungseinheit entnommen. Die Spannung an dem ersten Kondensator wird in der zweiten Schaltungseinheit von einer Schwellwertschaltung, beispielsweise einer Komparatorschaltung, überwacht. Bei Über- oder Unterschreiten eines zweiten Referenz-Bereichs des elektrischen Potentials, auf dem sich der erste Kondensator befindet, gibt die zweite Schaltungseinheit einen Rücksetzimpuls aus. Dieser digitale Impuls, der vorzugsweise eine feste zeitliche Länge aufweist, setzt das Potential des Kondensators (bzw. die elektrische Spannung zwischen den beiden Kondensatorplatten) auf ein erstes elektrisches Referenz-Potential zurück. Der Impuls sollte eine konstante Länge aufweisen, da während dieser Zeit der Gegenstrom einer Spannungsquelle entnommen wird. Diese Totzeit reduziert die gemessene Frequenz und ist, sofern die Totzeit nicht vernachlässigbar klein ist, bei der Auswertung der Daten zu berücksichtigen.

Um in einem Szenario, in dem die Totzeit nicht vernachlässigbar ist bzw. kompensiert werden soll, den Messfehler durch das Rücksetzen der Schaltung zu minimieren, können zwei (oder mehr) Kondensatoren vorgesehen werden, die wechselweise in der beschriebenen Art betrieben werden. Wird der eine (aktive) Kondensator durch den Sensor-Strom geladen, so wird der andere (passive) Kondensator in diesem Zeitintervall auf das erste elektrische Referenz-Potential zurückgesetzt. Überschreitet das Potential am aktiven Kondensator den vorgegebenen Wert, so wird vorzugsweise durch die zweite Schaltungs-Einheit 103 nicht unmittelbar ein Rücksetzimpuls ausgelöst, sondern zwischen den beiden Kondensatoren zunächst umgeschaltet und erst anschließend der nun passive Kondensator zurückgesetzt. Mittels dieser Vorgehensweise wird der Sensorstrom zu keinem Zeitpunkt einer Spannungsquelle direkt entnommen, sondern stets einem Kondensator, der als Ladungsreservoir dient.

Wiederum bezugnehmend auf **Fig.1** erfolgt der Rücksetzvorgang vorzugsweise mittels eines Schalttransistors, der den ersten Kondensator in der Rücksetzphase auf ein vorgebbares Potential entlädt (zum Beispiel völlig entlädt). Das erste elektrische Referenz-Potential ist vorzugsweise ein MassePotential. Der Sensor-Strom lädt den ersten Kondensator anschließend wieder auf. Die zeitliche Abhängigkeit der elektrischen Spannung an dem ersten Kondensator ist durch folgenden Ausdruck beschreibbar:

$$U(t) = 1/C \int_0^t I_{Sensor} dt' \qquad (3)$$

Der von der Sensor-Elektrode abgeleitete Sensor-Strom $I_{Sensor}$ weist, wie oben bezugnehmend auf **Fig.5** beschrieben, einen konstanten Offset-Anteil $I_{Offset}$ und einen (idealerweise) linear mit der Zeit ansteigendem Signal-Strom auf:

$$I_{Sensor} = I_{Offset} + mt \qquad (4)$$

Setzt man Gleichung (4) in Gleichung (3) ein und berechnet man das Integral, so ergibt sich für die elektrische Spannung, die sich zwischen einem ersten Zeitpunkt $t_1$ und einem zweiten Zeitpunkt $t_2$ aufbaut, zu:

$$U(t) = 1/C \ (I_{Offset}[t_2-t_1] + m/2[t_2^2-t_1^2]) \qquad (5)$$

Das Zeitintervall $\Delta t$, in der eine bestimmte Spannungsdifferenz $\Delta U$ aufgebaut wird, ist daher:

$$\Delta t = t_2-t_1 \approx (C\Delta U)/(I_{Offset}+m\underline{t}) \qquad (6)$$

Dabei ist $\underline{t}$ die mittlere Zeit des betrachteten Intervalls, d.h.

$$\underline{t} = (t_1+t_2)/2 \qquad (7)$$

Die innerhalb eines ausreichend kurzen Intervalls $\Delta t$ gemessene Frequenz f unter Vernachlässigung einer Totzeit $t_{Tot}$ beim Rücksetzen des Kondensators ($t_{Tot} << \Delta t$) ergibt sich demnach zu:

$$f = \Delta t^{-1} = I_{Offset}/(C\Delta U) + m\underline{t}/(C\Delta U) \qquad (8)$$

Diese Frequenz f kann als digitales Signal direkt von der Schaltkreis-Anordnung weggeleitet (beispielsweise von einem Chip, falls die Schaltkreis-Anordnung in ein Halbleiter-Substrat integriert ist) und weiterverarbeitet bzw. ausgewertet werden. Gleichung (8) zeigt, dass die Frequenz f einen konstanten Anteil aufweist, der auf den Offset-Strom $I_{Offset}$ der Sensor-Elektrode zurückgeht. Der zweite Term in (8) repräsentiert den linear mit der zeit ansteigenden Frequenzanteil (die Annahme eines exakt linear ansteigenden Stromsignals ist selbstverständlich idealisierend)., der auf Sensor-Ereignisse gemäß dem Redox-Recycling-Prinzip zurückgeht, und der die eigentliche Messgröße m beinhaltet.

Die messtechnisch relevante Größe m erhält man, indem beispielsweise zwei Perioden- oder Frequenzmessungen mit einem vorgegebenen Zeitabstand $\Delta t_{Mess} = t_B - t_A$ durchgeführt werden. Setzt man $t_A$ bzw. $t_B$ in Gleichung (8) ein und subtrahiert man die daraus erhaltenen Frequenzen $f_A$ und $f_B$ voneinander, so erhält man als Frequenzunterschied $\Delta f$:

$$\Delta f \;=\; f_B - f_A \;=\; m\Delta t_{Mess} / (C\Delta U) \qquad (9)$$

Daraus ergibt sich die messtechnisch relevante Größe m zu:

$$m \;=\; \Delta f C \Delta U / \Delta t_{Mess} \qquad (10)$$

Aus zwei Messungen der Ausgangsfrequenz des Sensors kann demnach direkt die messtechnisch relevante Größe m, anschaulich die Steigung des Kurvenverlauf Strom-Zeit 503 aus **Fig.5**, ermittelt werden.

Alternativ zu der beschriebenen Frequenz- oder Periodendauer-Messung ist es möglich, die Pulse der zweiten Schaltungseinheit dem Eingang eines Zähler-Elements bereitzustellen, das die Anzahl bzw. die zeitliche Abfolge der Pulse summiert und vorzugsweise in ein Binärwort umwandelt, welches die Anzahl der verstrichenen Zeitintervalle $\Delta t$ kodiert.

Ein derartiges Zähler-Element kann eine vorgegebene Zeit lang die Rücksetz-Pulse des ersten Kondensators zählen, nach einem externen Puls den Zählerstand digital ausgeben und anschließend das Zähler-Element zurücksetzen.

Der Zählerstand n des Zähler-Elements der Schaltkreis-Anordnung nach Ablauf des mittels der Zeitpunkte $t_{c1}$ und $t_{c2}$ definierten Zeitraums $t_{Count} = t_{c2} - t_{c1}$ berechnet sich in guter Näherung zu:

$$n \;=\; \int_{t_{c1}}^{t_{c2}} f\, d\underline{t} \;=\; I_{Offset}(t_{c2} - t_{c1})/(C\Delta U) + m(t_{c2}^{\,2} - t_{c1}^{\,2})/(2C\Delta U) \qquad (11)$$

Entsprechend dem oben bezugnehmend auf das Ermitteln von m aus Frequenzmessungen Dargestellten sind mindestens zwei Messungen der Zählerstände n erforderlich, aus denen mittels Gleichung (11) sowohl $I_{Offset}$ als auch die messtechnisch relevante Größe m bestimmt werden können.

Ein Vorteil der Integration eines Zähler-Elements in die Schaltkreis-Anordnung der Erfindung ist die daraus resultierende automatisch erfolgende zeitliche Mittelung des Messergebnisses. Da bei den - insbesondere beim Nachweis von Biomolekülen - zu erwartenden kleinen Sensor-Strömen Fluktuationen im Momentanwert der Messgröße möglich sind (beispielsweise infolge von Rauscheffekten etc.) ist eine Mittelung besonders vorteilhaft.

Gemäß einem bevorzugten Ausführungsbeispiel der erfindungsgemäßen Schaltkreis-Anordnung weist die zweite Schaltungseinheit mindestens einen zweiten Kondensator auf, wobei die Schaltkreis-Anordnung derart eingerichtet ist, dass entweder einer der mindestens einen zweiten Kondensatoren oder der erste Kondensator oder mindestens zwei der Kondensatoren simultan der Schaltkreis-Anordnung zugeschaltet ist/sind.

Zur Erweiterung des Dynamikbereichs und zur Verbesserung der Messgenauigkeit ist anschaulich eine umschaltbare Speicherkapazität bereitgestellt. Liefert die Sensor-Elektrode einen erhöhten elektrischen Sensor-Strom, was eine erhöhte Ausgangsfrequenz zur Folge hätte, kann dem ersten Kondensator beispielsweise ein weiterer parallel zugeschaltet werden. Dadurch reduziert sich die Ausgangsfrequenz und damit eventuelle Messungenauigkeiten aufgrund der Totzeit beim Rücksetzen des ersten Kondensators. Neben der so realisierten Messbereichsumschaltung kann auch das Intervall $\Delta U$, innerhalb dem die Kondensator-Spannung pendelt, verändert werden. Dies erlaubt eine kontinuierliche Durchstimmung des Messbereichs.

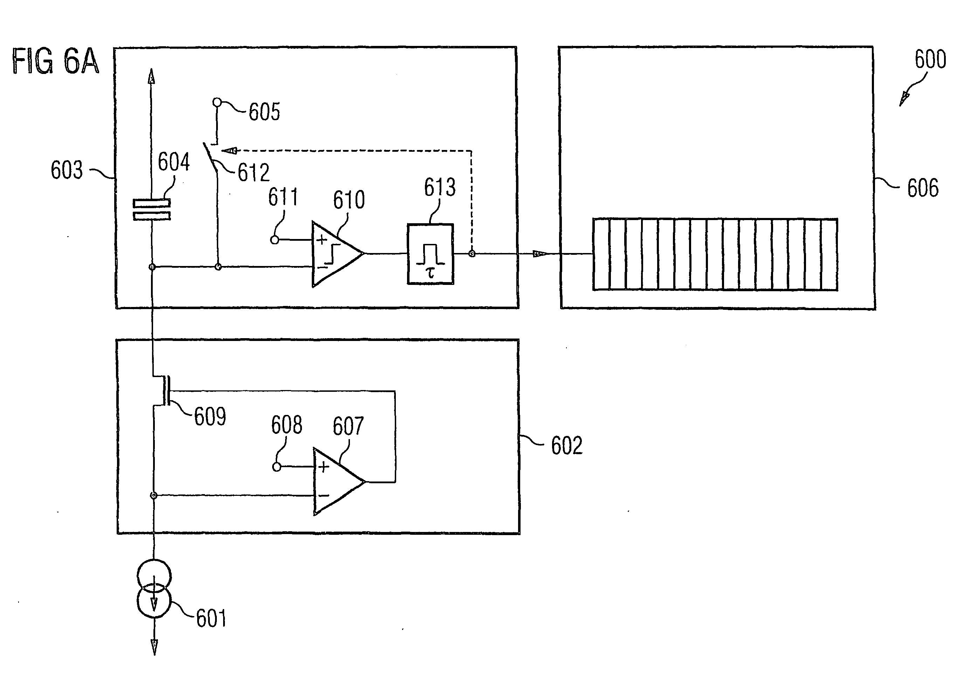

Im Weiteren wird bezugnehmend auf **Fig. 6A** eine Schaltkreis-Anordnung 600 gemäss einem zweiten bevorzugten Ausführungsbeispiel der Erfindung beschrieben.

Die Schaltkreis-Anordnung 600 weist eine Sensor-Elektrode 601, eine erste Schaltungseinheit 602, die mit der Sensor-Elektrode 601 gekoppelt ist und eine zweite Schaltungseinheit 603, die einen ersten Kondensator 604 aufweist, auf. Die erste Schaltungseinheit 602 ist derart eingerichtet, dass sie das elektrische Potential der Sensor-Elektrode 601 in einem vorgebbaren ersten Referenz-Bereich um ein vorgebbares elektrisches Soll-Potential hält, indem der erste Kondensator 604 und die Sensor-Elektrode 601 derart gekoppelt werden, dass ein Angleichen des elektrischen Potentials ermöglicht ist. Ferner ist die zweite Schaltungseinheit 603 derart eingerichtet, dass sie, wenn das elektrische Potential des ersten Kondensators 604 außerhalb eines zweiten Referenz-Bereichs ist, dieses Ereignis detektiert und den ersten Kondensator 604 auf ein erstes elektrisches Referenz-Potential, bereitgestellt von der ersten Spannungsquelle am Knoten 605, der zweiten Schaltungseinheit 603, bringt.

Darüber hinaus weist die Schaltkreis-Anordnung 600 ein mit der zweiten Schaltungseinheit 603 elektrisch gekoppeltes Zähler-Element 606 auf, das derart eingerichtet ist, dass es die Anzahl und die zeitliche Abfolge der Ereignisse zählt.

Darüber hinaus weist die erste Schaltungseinheit 602 ein erstes Komparator-Element 607 mit zwei Eingängen und einem Ausgang auf, wobei der erste Eingang derart mit der Sensor-Elektrode 601 gekoppelt ist, dass der erste Eingang auf dem elektrischen Potential der Sensor-Elektrode 601 ist. Der zweite Eingang ist auf ein drittes elektrisches Referenz-Potential gebracht, welches das elektrische Soll-Potential (bzw. den ersten elektrischen Referenz-Bereich) definiert. Das dritte elektrische Referenz-Potential, auf dem der zweite Eingang des ersten Komparator-Elements 607 befindlich ist, ist von einer zweiten Spannungsquelle 608 bereitgestellt. Ferner ist das erste Komparator-Element 607 derart eingerichtet, dass an dessen Ausgang ein derartiges elektrisches Signal erzeugt wird, dass das elektrische Potential der Sensor-Elektrode 601 in dem vorgebbaren ersten Referenz-Bereich um das vorgebbare elektrische Soll-Potential gehalten wird.

Wie ferner in **Fig.6A** gezeigt, weist die erste Schaltungseinheit 602 einen Transistor 609 auf, dessen Gate-Bereich mit dem Ausgang des ersten Komparator-Elements 607 gekoppelt ist, dessen erster Source-/Drain-Bereich mit der Sensor-Elektrode 601 gekoppelt ist und dessen zweiter Source-/Drain-Bereich mit dem ersten Kondensator 604 gekoppelt ist.

Anschaulich ist der Feldeffekttransistor 609 ein veränderbarer (von dem ersten Komparator-Element 607 steuerbarer) ohmscher Widerstand, mittels welchem die Sensor-Elektrode 601 mit dem ersten Kondensator 604 der zweiten Schaltungs-Einheit 603 derart koppelbar ist, dass das elektrische Potential der Sensor-Elektrode 601, in dem vorgebbaren ersten Referenz-Bereich um das vorgebbare elektrische Soll-Potential gehalten wird. Mit anderen Worten kann mittels des Transistors 609 jeder Zwischenwert zwischen vollständiger Kopplung und vollständiger Entkopplung von Sensor-Elektrode 601 und Kondensator 604 eingestellt werden.

Ferner weist die zweite Schaltungseinheit 603 ein zweites Komparator-Element 610 mit zwei Eingängen und einem Ausgang auf, wobei der erste Eingang derart mit dem ersten Kondensator 604 gekoppelt ist, dass der erste Eingang auf dem elektrischen Potential des ersten Kondensators 604 ist, und wobei der zweite Eingang auf einem vierten elektrischen Referenz-Potential ist, das von einer dritten Spannungsquelle 611 bereitgestellt ist, welches vierte elektrische Referenz-Potential den zweiten elektrischen Referenz-Bereich definiert. Das zweite Komparator-Element 610 ist derart eingerichtet, dass an dessen Ausgang ein derartiges elektrisches Signal erzeugt wird, dass, wenn das elektrische Potential des ersten Kondensators 604 das vierte elektrische Referenz-Potential überschreitet, der erste Kondensator 604 auf das erste elektrische Referenz-Potential gebracht wird. Dazu wird von der zweiten Schaltungseinheit 603 dem Schalter 612 (der beispielsweise als Transistor ausgebildet sein kann) ein derartiges elektrisches Signal bereitgestellt, dass der Schalter 612 geschlossen wird und eine elektrische Kopplung zwischen der ersten Spannungsquelle 605 und dem ersten Kondensator 604 erzeugt wird.

Ferner wird an dem Ausgang des zweiten Komparators 610 ein Pulsgeber 613 angeschlossen, der das Ereignis detektiert, dass das elektrische Potential des ersten Kondensators 604 außerhalb des zweiten Referenz-Bereichs ist und einen digitalen Impuls definierter Länge τ ausgibt.

Wie ferner in **Fig.6A** gezeigt, wird dieses Puls-Signal des Pulsgebers 613 dem Zähler-Element 606 bereitgestellt, das die Anzahl der Pulse und deren zeitliche Abfolge (d.h. die Frequenz, mit der die Pulse eintreffen) zählt.

Das erste Komparator-Element 607 und das zweite Komparator-Element 610 der Schaltkreis-Anordnung 600 sind jeweils als ein Operationsverstärker ausgestaltet.

Das in **Fig.6A** gezeigte Prinzipschaltbild der erfindungsgemäßen Schaltkreis-Anordnung 600 weist also eine Potentiostaten-Einheit auf, die mittels der ersten Schaltungseinheit 602 bzw. mittels des ersten Kondensators 604 realisiert ist. Diese hält das elektrische Potential der Sensor-Elektrode 601 auf dem elektrischen Soll-Potential innerhalb des ersten Referenz-Bereichs, definiert mittels des dritten elektrischen Referenz-Potentials. Der von der Sensor-Elektrode 601 abgeleitete Sensor-Strom wird der zweiten Schaltungseinheit 603 entnommen, die darüber hinaus als Strom-Frequenz-Wandler fungiert. Der erste Kondensator 604 liefert der Sensor-Elektrode 601 elektrische Ladung zum Halten deren elektrischen Potentials nach, wobei die an dem ersten Kondensator 604 anliegende elektrische Spannung mittels der beschriebenen Komparator-Schaltung überwacht wird. Fällt die elektrische Spannung des ersten Kondensators 604 unter einen Schwellwert, so löst der Komparator 610 bzw. der Pulsgeber 613 einen Puls der definierten Länge τ aus, der mittels des Schalters 612 den ersten Kondensator 604 auf das elektrische Potential der ersten Spannungsquelle 605 umlädt. Der Puls dient darüber hinaus als Zählpuls für das mit dem Ausgang des zweiten Komparator-Elements 610 gekoppelte Zähler-Element 606.

Es ist zu betonen, dass die in **Fig.6A** gezeigte Schaltkreis-Anordnung 600 derart eingerichtet ist, dass sie der Sensor-Elektrode 601 elektrische Ströme bereitstellt, die Sensor-Elektrode 601 arbeitet hier als Stromsenke. Sollen dagegen an der Sensor-Elektrode 601 generierte elektrische Ströme von der Schaltkreis-Anordnung 600 aufgenommen werden, müsste diese komplementär aufgebaut werden.

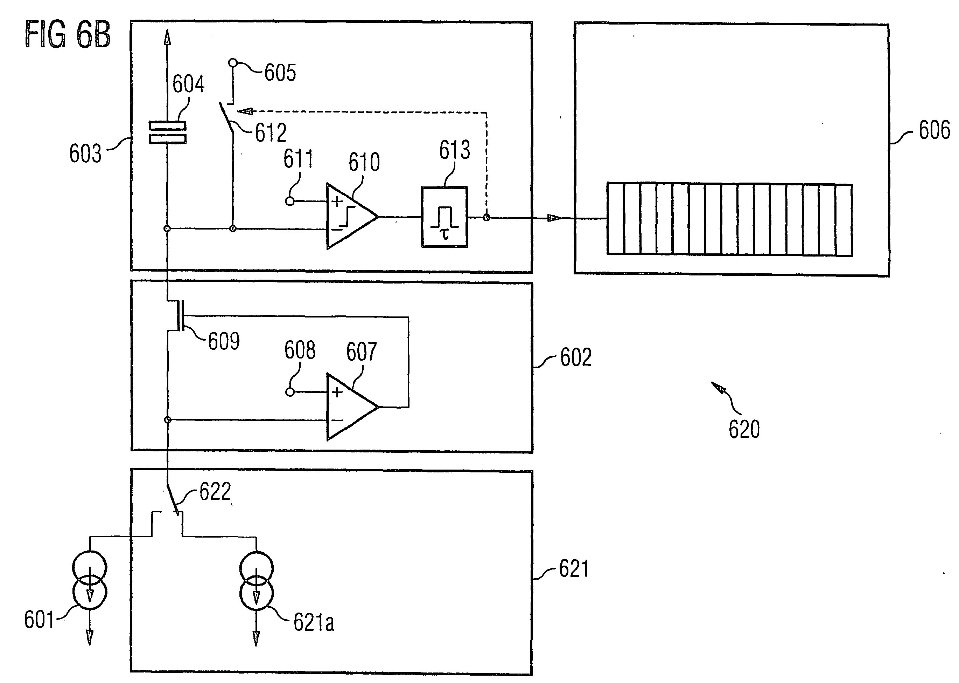

Im Weiteren wird bezugnehmend auf **Fig.6B** ein drittes bevorzugtes Ausführungsbeispiel der erfindungsgemäßen Schaltkreis-Anordnung beschrieben. Diejenigen Elemente der Schaltkreis-Anordnung 620, die der in **Fig.6A** gezeigten und oben beschriebenen Schaltkreis-Anordnung 600 entsprechen, sind mit dem gleichen Bezugzeichen versehen. Im Weiteren werden lediglich diejenigen Komponenten der Schaltkreis-Anordnung 620 näher beschrieben, die von der in **Fig.6A** gezeigten Schaltkreis-Anordnung 600 abweichen.

Die Schaltkreis-Anordnung 620 weist eine mit der ersten Schaltungseinheit 602 koppelbare Kalibrier-Einrichtung 621 zum Kalibrieren der Schaltkreis-Anordnung 620 auf, die derart eingerichtet ist, dass mittels der Kalibrier-Einrichtung 621 an die erste Schaltungseinheit 602 ein zweites elektrisches Referenz-Potential anlegbar ist, wobei die erste Schaltungseinheit 602 entweder mit der Kalibrier-Einrichtung 621 oder mit der Sensor-Elektrode 601 gekoppelt ist.

Besonders vorteilhaft bei der in **Fig.6B** gezeigten Schaltkreis-Anordnung 620 ist, dass die Sensor-Elektrode 601 optional von der ersten Schaltungseinheit 602 abkoppelbar ist und stattdessen mit der Kalibrier-Einrichtung 621, deren wesentliche Komponente eine Referenz-Stromquelle 621a ist, koppelbar ist. Mittels eines von der Kalibrier-Einrichtung 621 erzeugten Kalibrier-Stroms kann eine Eichung der Schaltkreis-Anordnung 620 vorgenommen werden. Dies ist insbesondere dann vorteilhaft, wenn der exakte Wert der Kapazität C des ersten Kondensators 604 nicht bekannt ist.

Neben statistischen Schwankungen der Kapazität des ersten Kondensators 604 infolge Variationen in der Prozesstechnik während des Herstellungsverfahrens des ersten Kondensators 604 tragen die nur mit großem Aufwand oder gar nicht exakt berechenbaren parasitären Kapazitäten der Schaltkreis-Anordnung 620 wesentlich zur Gesamtkapazität des Speicherknotens bei und beeinflussen die resultierende Ausgangsfrequenz, in der das zu erfassende Stromsignal kodiert ist, maßgeblich. Auch Offset-Spannungen, insbesondere des zweiten Komparators 610 in dem Strom-Frequenz-Wandler sowie eventuelle Leckströme haben einen direkten Einfluss auf die zu erfassende Ausgangsfrequenz. Wie in **Fig.6B** gezeigt, weist die Kalibrier-Einrichtung 621 eine zuschaltbare Referenz-Stromquelle 621a auf, die einen bekannten Sensor-Strom bereitstellt, oder diesen um einen bestimmten Betrag erhöht oder reduziert, wenn die Referenz-Stromquelle 621a parallel zum Sensor zugeschaltet wird. Die infolge des Zuschaltens resultierende Frequenzänderung dient dann zum Eichen der Schaltkreis-Anordnung 620. Eine derartige Eichung kann insbesondere vor dem Aufbringen eines Analyten auf die Sensor-Elektrode 601 durchgeführt werden. In diesem Falle liefert die Sensor-Elektrode 601 keinen von Sensor-Ereignissen stammenden Signal-Strom, und die Ausgangsfrequenz wird von dem Referenz-Strom der Referenz-Stromquelle 621a bestimmt.

Das wahlweise Zuschalten entweder der Sensor-Elektrode 601 oder der Kalibrier-Einrichtung 621 zu der ersten Schaltungseinheit 602 ist mittels eines weiteren Schalters 622 realisiert. Der Schalter 622 kann derart umgeschaltet werden, dass in dem in **Fig.6B** gezeigten Betriebszustand die Kalibrier-Einrichtung 621 der zweiten Schaltungseinheit 602 zugeschaltet ist, wohingegen in dem in **Fig.6B** gezeigten Betriebszustand die Sensor-Elektrode 601 der ersten Schaltungseinheit 602 nicht zugeschaltet ist. In einem komplementären Szenario, die einem Umlegen des in **Fig. 6B** gezeigten weiteren Schalters 622 entspricht, ist die Sensor-Elektrode 601 der ersten Schaltungseinheit 602 zugeschaltet, wohingegen die Kalibrier-Einrichtung 621 dem ersten Schaltkreis nicht zugeschaltet ist.

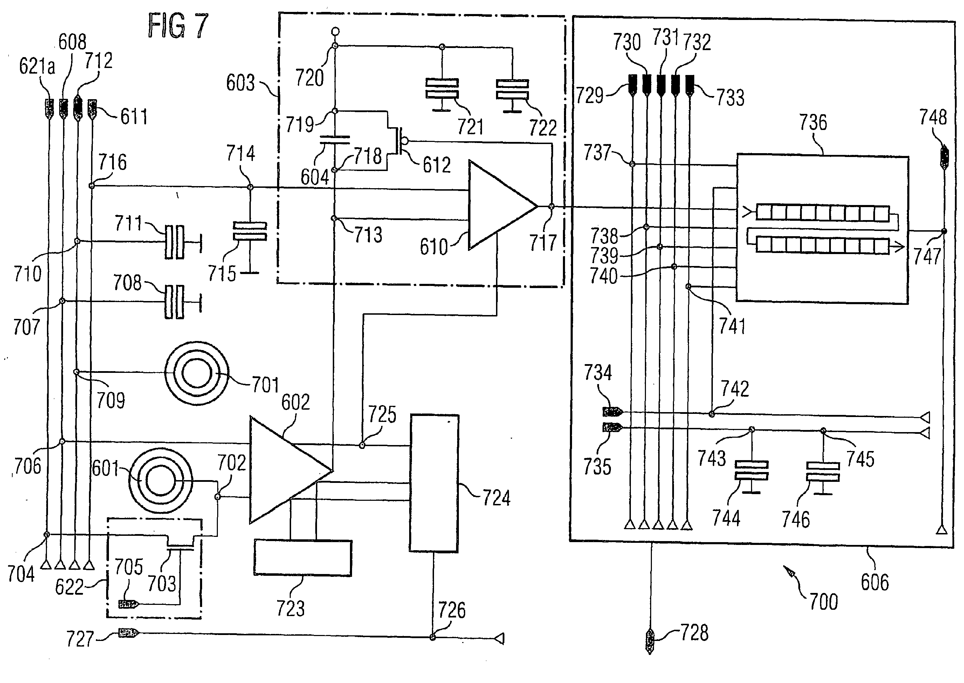

Im Weiteren wird bezugnehmend auf **Fig.7** ein viertes bevorzugtes Ausführungsbeispiel der erfindungsgemäßen Schaltkreis-Anordnung 700 beschrieben. Diejenigen Komponenten bzw. Blöcke aus **Fig.7,** die in **Fig.6B** eine direkte Entsprechung finden, sind in **Fig.7** mit den gleichen Bezugsziffern bezeichnet wie in **Fig.6B.**

**Fig.7** stellt eine Ausführungsform einer Sensor-Einheit dar, wie sie in einer matrixförmigen Anordnung mehrerer Sensor-Einheiten eingesetzt werden kann.

In **Fig.7** ist die Sensor-Elektrode 601 gezeigt. Ferner ist in **Fig.7** eine weitere Sensor-Elektrode 701 gezeigt. Die Sensor-Elektrode 601 ist mit einem ersten elektrischen Knoten 702 gekoppelt. Der erste elektrische Knoten 702 ist mit dem invertierten Eingang der ersten Schaltungseinheit 602 (funktionell ein Spannungsregler bzw. Potentiostat, im Weiteren auch als Regel-Element 602 bezeichnet) gekoppelt. Ferner ist der erste elektrische Knoten 702 mit dem einen Source-/Drain-Bereich eines ersten Transistors 703 gekoppelt. Der andere Source-/Drain-Bereich des ersten Transistors 703 ist mit einem zweiten elektrischen Knoten 704 gekoppelt. Der zweite elektrische Knoten 704 ist mit der Referenz-Stromquelle 621a der Kalibrier-Einrichtung gekoppelt. Der Gate-Bereich des ersten Transistors 703 ist mit einer ersten Spannungsversorgung 705 gekoppelt. Die erste Spannungsversorgung 705 und der erste Transistor 703 bilden den weiteren Schalter 622 aus. Der nicht-invertierte Eingang des Regel-Elements 602, das unter anderem einen Operationsverstärker enthält, ist mit einem dritten elektrischen Knoten 706 gekoppelt. Der dritte elektrische Knoten 706 ist identisch mit einem vierten elektrischen Knoten 707 -. "Identisch" in diesem Sinne bedeutet "elektrisch identisch", d.h., dass der elektrische Knoten 706 und der elektrische Knoten 707 (annähernd) auf dem gleichen elektrischen Potential liegen. Der vierte elektrische Knoten 707 ist ferner mit einer ersten Kapazität 708 sowie mit der zweiten Spannungsquelle 608 gekoppelt. Die weitere Elektrode 701 ist mit einem fünften elektrischen Knoten 709 gekoppelt. Der fünfte elektrische Knoten 709 ist identisch mit einem sechsten elektrischen Knoten 710. Der sechste elektrische Knoten 710 ist mit einer zweiten Kapazität 711 gekoppelt. Ferner ist der sechste elektrische Knoten 710 mit einer zweiten Spannungsversorgung 712 gekoppelt. Der Ausgang des ersten Regel-Elements 602 ist mit einem siebten elektrischen Knoten 713 gekoppelt. Der siebte elektrische Knoten 713 ist mit dem invertierten Eingang des zweiten Komparator-Elements 610, das als Operationsverstärker ausgebildet ist, gekoppelt. Der nicht-invertierte Eingang des zweiten Komparator-Elements 610 ist mit einem achten elektrischen Knoten 714 gekoppelt. Der achte elektrische Knoten 714 ist mit einer dritten Kapazität 715 gekoppelt. Ferner ist der achte elektrische Knoten 714 identisch mit einem neunten elektrischen Knoten 716 -. Der neunte elektrische Knoten 716 ist mit der dritten Spannungsquelle 611 gekoppelt. Ferner ist der Ausgang des Komparator-Elements 610 mit einem zehnten elektrischen Knoten 717 gekoppelt. Der zehnte elektrische Knoten 717 ist mit dem Gate-Bereich des Schalters 612 gekoppelt, welcher Schalter 612 als Transistor ausgebildet ist. Der eine Source-/ Drain-Bereich des Schalters 612 ist mit einem elften elektrischen Knoten 718 gekoppelt. Der elfte elektrische Knoten 718 ist identisch mit dem siebten elektrischen Knoten 713 - und ist mit dem ersten Kondensator 604 gekoppelt. Der andere Source-/Drain-Bereich des Schalters 612 ist mit einem zwölften elektrischen Knoten 719 gekoppelt. Der zwölfte elektrische Knoten 719 ist einerseits mit dem ersten Kondensator 604 gekoppelt und andererseits identisch mit einem dreizehnten elektrischen Knoten 720. Der dreizehnte elektrische Knoten 720 ist mit einer vierten Kapazität 721 und mit einer fünften Kapazität 722 gekoppelt. An dem Knoten 720 liegt die positive Betriebsspannung. Ferner weist die Schaltkreis-Anordnung 700 eine erste Spannungsversorgungs-Einheit 723 und eine zweite Spannungsversorgungs-Einheit 724 auf. Ein erster und ein zweiter Anschluss der ersten Spannungsversorgungs-Einheit 723 sind mit zwei weiteren Anschlüssen des Regel-Elements 602 gekoppelt und diese weiteren Anschlüsse sind ferner mit zwei Anschlüssen der zweiten Spannungsversorgungs-Einheit 724 gekoppelt. Ein weiterer Anschluss der zweiten Spannungsversorgungs-Einheit 724 ist mit einem vierzehnten elektrischen Knoten 725 gekoppelt. Der vierzehnte elektrischen Knoten 725 ist sowohl mit einem weiteren Anschluss des Regel-Elements 602 als auch mit einem weiteren Anschluss des Komparator-Elements 610 gekoppelt. Ein weiterer Anschluss der zweiten Spannungsversorgungs-Einheit 724 ist mit einem fünfzehnten elektrischen Knoten 726 gekoppelt. Der fünfzehnte elektrische Knoten 726 ist mit einer dritten Spannungsversorgung 727 gekoppelt.

Ferner ist in **Fig.7** das Zähler-Element 606 gezeigt. Das Zähler-Element 606 ist mit einer vierten Spannungsversorgung 728 gekoppelt. Das Zähler-Element 606 weist ein erstes Steuersignal 729, ein zweites Steuersignal 730, ein drittes Steuersignal 731, ein viertes Steuersignal 732, ein fünftes Steuersignal 733, ein sechstes Steuersignal 734 und ein siebtes Steuersignal 735 auf. Ferner weist das Zähler-Element 606 eine Zähler-Einheit 736 auf. Das erste Steuersignal 729 ist mit einem sechzehnten elektrischen Knoten 737 gekoppelt. Der sechzehnte elektrische Knoten 737 ist mit einem Eingang der Zähler-Einheit 736 gekoppelt. Das zweite Steuersignal 730 ist mit einem siebzehnten elektrischen Knoten 738 gekoppelt. Der siebzehnte elektrische Knoten 738 ist mit einem weiteren Eingang der Zähler-Einheit 736 gekoppelt. Das dritte Steuersignal 731 ist mit einem achtzehnten elektrischen Knoten 739 gekoppelt. Der achtzehnte elektrische Knoten 739 ist mit einem weiteren Eingang der Zähler-Einheit 736 gekoppelt. Das vierte Steuersignal 732 ist mit einem neunzehnten elektrischen Knoten 740 gekoppelt. Der neunzehnte elektrische Knoten 740 ist mit einem weiteren Eingang der Zähler-Einheit 736 gekoppelt. Das fünfte Steuersignal 733 ist mit einem zwanzigsten elektrischen Knoten 741 gekoppelt. Der zwanzigste elektrische Knoten 741 ist mit einem weiteren Eingang der Zähler-Einheit 736 gekoppelt. Das sechste Steuersignal 734 ist mit einem einundzwanzigsten elektrischen Knoten 742 gekoppelt. Der einundzwanzigste elektrische Knoten 742 ist mit einem weiteren Eingang der Zählereinheit 736 gekoppelt. Das siebte Steuersignal 735 ist mit einem zweiundzwanzigsten elektrischen Knoten 743 gekoppelt. Der zweiundzwanzigste elektrische Knoten 743 ist mit einer sechsten Kapazität 744 gekoppelt. Ferner ist der zweiundzwanzigste elektrische Knoten 743 identisch mit einem dreiundzwanzigsten elektrischen Knoten 745. Der dreiundzwanzigste elektrische Knoten 745 ist mit einer siebten Kapazität 746 gekoppelt. An dem Ausgang der Zähler-Einheit 736 liegt ein Signal an, in dem der Zählerstand kodiert ist. Dieses Signal wird einem vierundzwanzigsten elektrischen Knoten 747 bereitgestellt. Das Zählerstand-Signal wird seriell von dem vierundzwanzigsten elektrischen Knoten 747 an einen Ausgangs-Anschluss 748 übermittelt.

Zusammenfassend sind wesentliche Komponenten der in **Fig.7** gezeigten Schaltkreis-Anordnung 700 die beiden Sensor-Elektroden 601, 701, die erste Schaltungseinheit 602, der als Speicherkapazität dienende erste Kondensator 604 mit dem dazu parallel geschalteten, als Transistor ausgebildeten Schalter 612, der zum Rücksetzen der Kondensator-Spannung dient. Dieses Rücksetzen wird mittels des zweiten Komparator-Elements 610, das ebenfalls als Operationsverstärker ausgebildet ist, ausgelöst, das die Spannung über dem ersten Kondensator 604 mit dem Spannungs-Signal der dritten Spannungsquelle 611 vergleicht und den als Transistor ausgebildeten Schalter 612 entsprechend ansteuert.

Es ist zu betonen, dass in der in **Fig.7** gezeigten Realisierung ein eigenständiger Schaltungsblock zum Erzeugen eines Pulses einer konstanten Länge nicht vorgesehen ist. Eine geeignete zeitliche Pulsdauer ergibt sich infolge der gezeigten Schaltung automatisch aus der Reaktionszeit des Systems 'zweites Komparator-Element 610 - erster Kondensator 604 - Schalter 612' und weist über einen großen Messbereich hinreichend konstante Werte auf.

Die Pulse des zweiten Komparator-Elements 610 werden in der Zähler-Einheit 736 des Zähler-Elements 606 gezählt. Mittels der Steuersignale kann die Zähler-Einheit 736 in einen Schieberegister-Betrieb umgeschaltet werden, wodurch der aktuelle Zählerstand an dem Ausgangs-Anschluss 748 seriell ausgegeben wird.

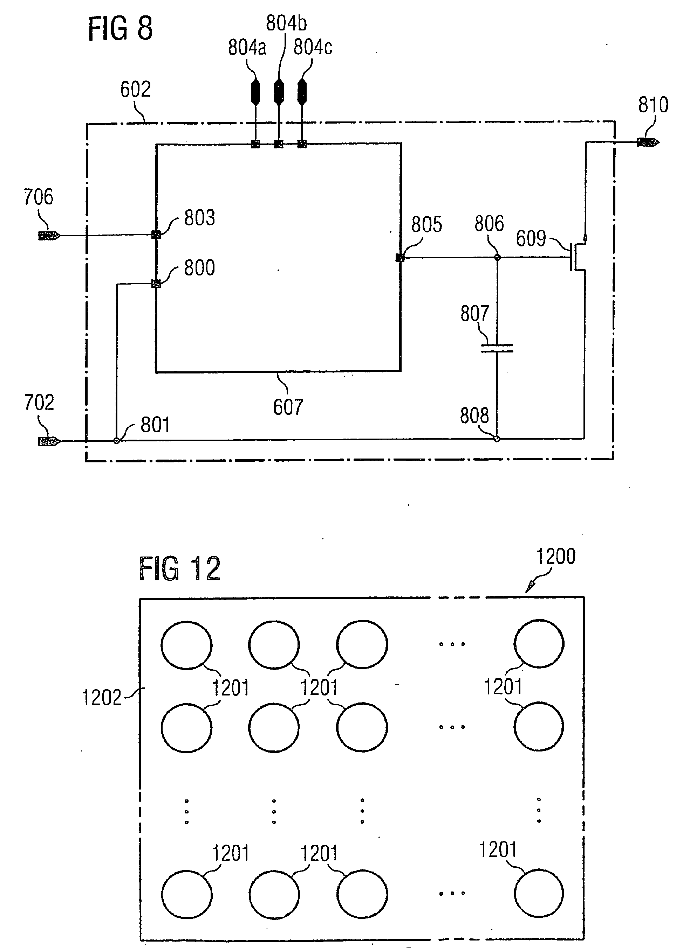

Im Weiteren wird bezugnehmend auf **Fig.8** die schaltungstechnische Ausgestaltung des ersten Komparator-Elements 607 in der in **Fig.7** gezeigten Schaltkreis-Anordnung 700 näher beschrieben. Diejenigen in **Fig.8** gezeigten Komponenten, die in **Fig.7** bzw. *\***Fig.6B** eine Entsprechung finden, sind mit den gleichen Bezugsziffern versehen.

In **Fig.8** ist das erste Regel-Element 602 (auch als erste Schaltungseinheit 602 bezeichnet) gezeigt. Der erste elektrische Knoten 702 aus **Fig.7** ist mit einem ersten elektrischen Knoten 801 gekoppelt und der erste elektrische Knoten 801 ist mit dem nicht-invertierten Eingang des Operationsverstärkers 607 (des ersten Komparator-Elements 607) gekoppelt. Der dritte elektrische Knoten 706 aus **Fig.7** ist mit dem invertierten Eingang 803 des Operationsverstärkers 607 gekoppelt. Ferner ist der Operationsverstärker 607 mit einem ersten Anschluss 804a, einem zweiten Anschluss 804b und einem dritten Anschluss 804c gekoppelt. Der erste Anschluss 804a ist mit der zweiten Spannungsversorgungs-Einheit 724 gekoppelt. Der zweite Anschluss 804b und der dritte Anschluss 804b sind jeweils mit der ersten Spannungsversorgungs-Einheit 823 gekoppelt. Ein Ausgang 805 des Operationsverstärkers 607 ist mit einem zweiten elektrischen Knoten 806 gekoppelt. Der zweite elektrische Knoten 806 ist mit einem Kondensator 807 gekoppelt. Der Kondensator 807 ist mit einem dritten elektrischen Knoten 808 gekoppelt. Der dritte elektrische Knoten 808 ist identisch mit dem ersten elektrischen Knoten 801. Ferner ist der zweite elektrische Knoten 806 mit dem Gate-Bereich des Transistors 609 gekoppelt. Der eine Source-/Drain-Bereich des Transistors 609 ist mit dem dritten elektrischen Knoten 808 gekoppelt und der andere Source-/Drain-Bereich des Transistors 609 ist mit einem Ausgangs-Anschluss 810 gekoppelt, welcher Ausgangs-Anschluss 810 dem Ausgang des ersten Regel-Elements 602 in **Fig.7** entspricht.

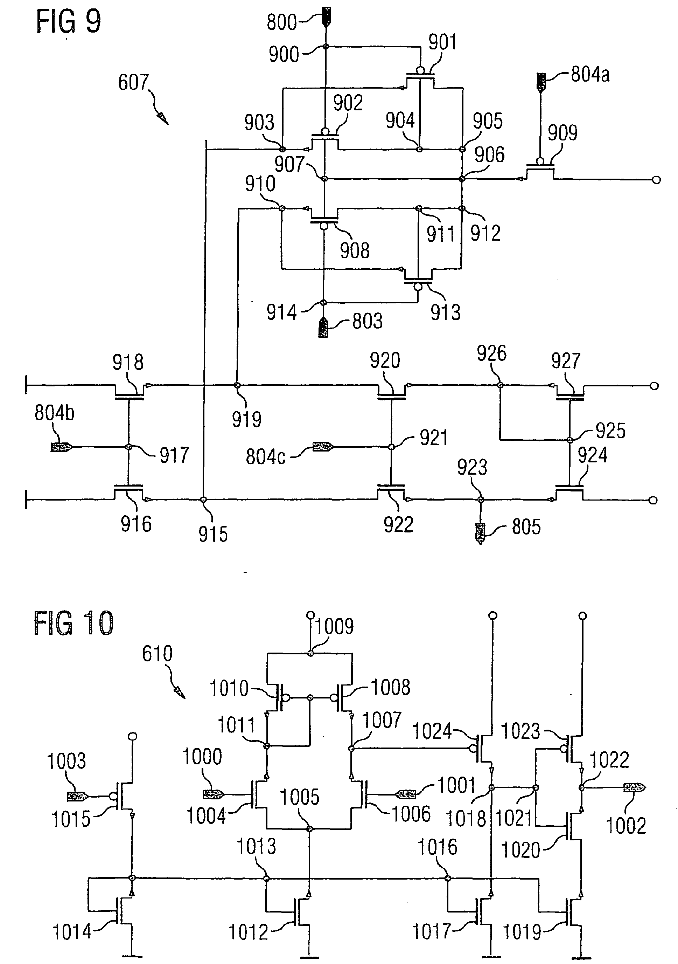

Im Weiteren wird bezugnehmend auf **Fig.9** der schaltungstechnische Aufbau des Operationsverstärkers 607 aus **Fig.8** näher beschrieben. Die Ein- und Ausgänge bzw. die Anschlüsse des Operationsverstärkers 607, die in Fig. 8 gezeigt sind, sind in **Fig.9** mit den gleichen Bezugsziffern versehen.

Der in **Fig.9** gezeigte nicht-invertierte Eingang 800 des Operationsverstärkers 607 ist mit einem ersten elektrischen Knoten 900 gekoppelt. Der erste elektrische Knoten 900 ist mit dem Gate-Bereich eines ersten Transistors 901 gekoppelt. Ferner ist der erste elektrische Knoten 900 mit dem Gate-Bereich eines zweiten Transistors 902 gekoppelt. Der eine Source-/Drain-Bereich des ersten Transistors 901 ist mit einem zweiten elektrischen Knoten 903 gekoppelt. Der andere Source-/Drain-Bereich des zweiten Transistors 902 ist mit einem dritten elektrischen Knoten 904 gekoppelt. Der dritte elektrische Knoten 904 ist mit dem ersten Transistor 901 gekoppelt und ist identisch mit einem vierten elektrischen Knoten 905 -. Der vierte elektrische Knoten 905 ist mit dem anderen Source-/Drain-Bereich des ersten Transistors 901 gekoppelt. Ferner ist der vierte elektrische Knoten 905 identisch mit einem fünften elektrischen Knoten 906 . Der fünfte elektrische Knoten 906 ist identisch mit einem sechsten elektrischen Knoten 907. Der sechste elektrische Knoten 907 ist sowohl mit dem zweiten Transistor 902 als auch mit einem dritten Transistor 908 gekoppelt. Der fünfte elektrische Knoten 906 ist ferner mit dem einen Source-/Drain-Bereich eines vierten Transistors 909 gekoppelt. Der Gate-Bereich des vierten Transistors 909 ist mit dem ersten Anschluss 804a des Operationsverstärkers 607 gekoppelt. Der eine Source-/Drain-Bereich des dritten Transistors 908 ist mit einem siebten elektrischen Knoten 910 gekoppelt. Der andere Source-/Drain-Bereich des dritten Transistors 908 ist mit einem achten elektrischen Knoten 911 gekoppelt. Der achte elektrische Knoten 911 ist identisch mit einem neunten elektrischen Knoten 912. Der neunte elektrische Knoten 912 ist mit dem einen Source-/Drain-Bereich eines fünften Transistors 913 gekoppelt. Ferner ist der neunte elektrische Knoten 912 identisch mit dem fünften elektrischen Knoten 906. Der andere Source-/Drain-Bereich des fünften Transistors 913 ist mit dem siebten elektrischen Knoten 910 gekoppelt. Darüber hinaus ist der achte elektrische Knoten 911 mit dem fünften Transistor 913 gekoppelt. Der Gate-Bereich des dritten Transistors 908 ist mit einem zehnten elektrischen Knoten 914 gekoppelt. Der zehnte elektrische Knoten 914 ist ferner mit dem Gate-Bereich des fünften Transistors 913 gekoppelt. Darüber hinaus ist der zehnte elektrische Knoten 914 mit dem invertierten Eingang 803 des Operationsverstärkers 607 gekoppelt. Der zweite elektrische Knoten 903 ist identisch mit einem elften elektrischen Knoten 915. Der elfte elektrische Knoten 915 ist mit dem einen Source-/Drain-Bereich eines sechsten Transistors 916 gekoppelt. Der Gate-Bereich des sechsten Transistors 916 ist mit einem zwölften elektrischen Knoten 917 gekoppelt. Der zwölfte elektrische Knoten 917 ist mit dem zweiten Anschluss 804b der Komparator-Einheit 607 gekoppelt. Ferner ist der zwölfte elektrische Knoten 917 mit dem Gate-Bereich eines siebten Transistors 918 gekoppelt. Der eine Source-/Drain-Bereich des siebten Transistors 918 ist mit einem dreizehnten elektrischen Knoten 919 gekoppelt. Der dreizehnte elektrische Knoten 919 ist identisch mit dem siebten elektrischen Knoten 910. Ferner ist der dreizehnte elektrische Knoten 919 mit dem ersten Source-/Drain-Bereich eines achten Transistors 920 gekoppelt. Der Gate-Bereich des achten Transistors 920 ist mit einem vierzehnten elektrischen Knoten 921 gekoppelt. Der vierzehnte elektrische Knoten 921 ist mit dem dritten Anschluss 804c des Operationsverstärkers 607 gekoppelt und ist ferner mit dem Gate-Bereich eines neunten Transistors 922 gekoppelt. Der eine Source-/Drain-Bereich des neunten Transistors 922 ist mit dem elften elektrischen Knoten 915 gekoppelt und der andere Source-/Drain-Bereich des neunten Transistors 922 ist mit einem fünfzehnten elektrischen Knoten 923 gekoppelt. Der fünfzehnte elektrische Knoten 923 ist mit dem Ausgang 805 des Operationsverstärkers 607 gekoppelt und ist ferner mit dem einen Source-/Drain-Bereich eines zehnten Transistors 924 gekoppelt. Der Gate-Bereich des zehnten Transistors 924 ist mit einem sechzehnten elektrischen Knoten 925 gekoppelt. Der sechzehnte elektrische Knoten 925 ist ferner identisch mit einem siebzehnten elektrischen Knoten 926. Der siebzehnte elektrische Knoten 926 ist mit dem einen Source-/Drain-Bereich eines elften Transistors 927 gekoppelt, und der Gate-Bereich des elften Transistors 927 ist mit dem sechzehnten elektrischen Knoten 925 gekoppelt. Ferner ist der siebzehnte elektrische Knoten 926 mit dem anderen Source-/Drain-Bereich des achten Transistors 920 gekoppelt.

Im Weiteren wird bezugnehmend auf **Fig.10** ein bevorzugtes Ausführungsbeispiel des in **Fig.6B, Fig.7** gezeigten zweiten Komparator-Elements 610 beschrieben.

Das in **Fig.10** gezeigte Komparator-Element 610 weist einen ersten Eingang 1000 auf, der mit dem in **Fig.7** gezeigten siebten elektrischen Knoten 713 gekoppelt ist. Das Komparator-Element 610 weist ferner einen zweiten Eingang 1001 auf, der mit dem achten elektrischen Knoten 714 aus **Fig.7** gekoppelt ist. Ferner weist das Komparator-Element 610 einen Ausgang 1002 auf, der mit dem zehnten elektrischen Knoten 717 der Schaltkreis-Anordnung 700 aus **Fig.7** gekoppelt ist. Darüber hinaus weist das zweite Komparator-Element 610 einen Versorgungs-Eingang 1003 auf, der mit dem vierzehnten elektrischen Knoten 725 der Schaltkreis-Anordnung 700 gekoppelt ist und der damit indirekt mit der zweiten Spannungsversorgungs-Einheit 724 elektrisch gekoppelt ist.

Der erste Eingang 1000 ist mit dem Gate-Bereich eines ersten Transistors 1004 gekoppelt. Der eine Source-/Drain-Bereich des ersten Transistors 1004 ist mit einem ersten elektrischen Knoten 1005 gekoppelt. Der erste elektrische Knoten 1005 ist ferner mit dem einen Source-/Drain-Bereich eines zweiten Transistors 1006 gekoppelt. Der Gate-Bereich des zweiten Transistors 1006 ist mit dem zweiten Eingang 1001 des zweiten Komparator-Elements 610 gekoppelt. Der andere Source-/Drain-Bereich des zweiten Transistors 1006 ist mit einem zweiten elektrischen Knoten 1007 gekoppelt. Der zweite elektrische Knoten 1007 ist mit dem einen Source-/Drain-Bereich eines dritten Transistors 1008 gekoppelt. Der andere Source-/Drain-Bereich des dritten Transistors 1008 ist mit einem dritten elektrischen Knoten 1009 gekoppelt. Der dritte elektrische Knoten 1009 ist mit dem einen Source-/Drain-Bereich eines vierten Transistors 1010 gekoppelt. Der Gate-Bereich des dritten Transistors 1008 ist mit dem Gate-Bereich des vierten Transistors 1010 gekoppelt, und der Gate-Bereich des vierten Transistors 1010 ist ferner mit einem vierten elektrischen Knoten 1011 gekoppelt. Der vierte elektrische Knoten 1011 ist mit dem anderen Source-/Drain-Bereich des ersten Transistors 1004 gekoppelt. Ferner ist der erste elektrische Knoten 1005 mit dem einen Source-/Drain-Bereich eines fünften Transistors 1012 gekoppelt. Der Gate-Bereich des fünften Transistors 1012 ist mit einem fünften elektrischen Knoten 1013 gekoppelt. Der fünfte elektrische Knoten 1013 ist mit dem Gate-Bereich und mit dem einen Source-/Drain-Bereich eines sechsten Transistors 1014 gekoppelt. Der eine Source-/Drain-Bereich des sechsten Transistors 1014 ist mit dem einen Source-/Drain-Bereich eines siebten Transistors 1015 gekoppelt.

Ferner ist der Gate-Bereich des siebten Transistors 1015 mit dem Versorgungs-Eingang 1003 gekoppelt. Der fünfte elektrische Knoten 1013 ist identisch mit einem sechsten elektrischen Knoten 1016. Ferner ist der sechste elektrische Knoten 1016 mit dem Gate-Bereich eines achten Transistors 1017 gekoppelt. Der eine Source-/Drain-Bereich des achten Transistors 1017 ist mit einem siebten elektrischen Knoten 1018 gekoppelt. Der sechste elektrische Knoten 1016 ist ferner mit dem Gate-Bereich eines neunten Transistors 1019 gekoppelt. Der eine Source-/Drain-Bereich des neunten Transistors 1019 ist mit dem einen Source-/Drain-Bereich eines zehnten Transistors 1020 gekoppelt. Der siebte elektrische Knoten 1018 ist identisch mit einem achten elektrischen Knoten 1021. Der Gate-Bereich des zehnten Transistors 1020 ist mit dem achten elektrischen Knoten 1021 gekoppelt. Der andere Source-/Drain-Bereich des zehnten Transistors 1020 ist mit einem neunten elektrischen Knoten 1022 gekoppelt. Der neunte elektrische Knoten 1022 ist mit dem Ausgang 1002 des zweiten Komparator-Elements 610 gekoppelt. Ferner ist der neunte elektrische Knoten 1022 mit dem einen Source-/Drain-Bereich eines elften Transistors 1023 gekoppelt. Der achte elektrische Knoten 1021 ist mit dem Gate-Bereich des elften Transistors 1023 gekoppelt. Ferner ist der siebte elektrische Knoten 1018 mit dem einen Source-/Drain-Bereich eines zwölften Transistors 1024 gekoppelt. Der Gate-Bereich des zwölften Transistors 1024 ist mit dem zweiten elektrischen Knoten 1007 gekoppelt.

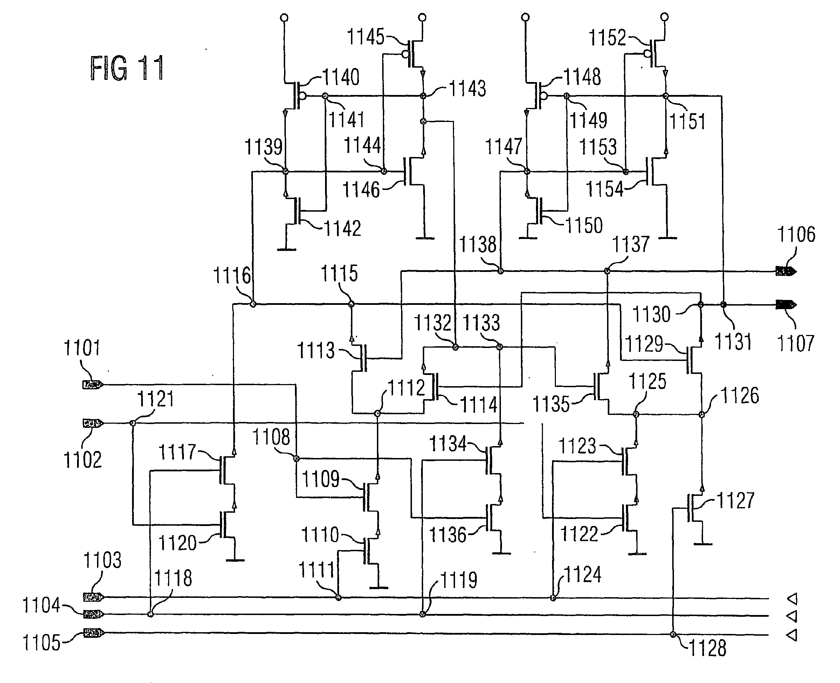

Im Folgenden wird bezugnehmend auf Fig.11 ein bevorzugtes Ausführungsbeispiel für ein Zähler-Element der erfindungsgemäßen Schaltkreis-Anordnung beschrieben.

Das in Fig.11 gezeigte Zähler-Element 1100 weist einen ersten Eingang 1101, einen zweiten Eingang 1102, einen dritten Eingang 1103, einen vierten Eingang 1104 und einen fünften Eingang 1105 auf. Ferner weist das Zähler-Element 1100 einen ersten Ausgang 1106 und einen zweiten Ausgang 1107 auf. Der erste Eingang 1101 ist mit einem ersten elektrischen Knoten 1108 gekoppelt. Der erste elektrische Knoten 1108 ist mit dem Gate-Bereich eines ersten Transistors 1109 gekoppelt. Der eine Source-/Drain-Bereich des ersten Transistors 1109 ist mit dem einen Source-/Drain-Bereich eines zweiten Transistors 1110 gekoppelt. Der Gate-Bereich des zweiten Transistors 1110 ist mit einem zweiten elektrischen Knoten 1111 gekoppelt. Der zweite elektrische Knoten 1111 ist mit dem dritten Eingang 1103 des Zähler-Elements 1100 gekoppelt. Der andere Source-/Drain-Bereich des ersten Transistors 1109 ist mit einem dritten elektrischen Knoten 1112 gekoppelt. Der dritte elektrische Knoten 1112 ist mit dem einen Source-/Drain-Bereich eines dritten Transistors 1113 gekoppelt. Ferner ist der dritte elektrische Knoten 1112 mit dem einen Source-/Drain-Bereich eines vierten Transistors 1114 gekoppelt. Der andere Source-/Drain-Bereich des dritten Transistors 1113 ist mit einem vierten elektrischen Knoten 1115 gekoppelt. Der vierte elektrische Knoten 1115 ist mit einem fünften elektrischen Knoten 1116 gekoppelt. Der fünfte elektrische Knoten 1116 ist mit dem einen Source-/Drain-Bereich eines fünften Transistors 1117 gekoppelt. Der Gate-Bereich des fünften Transistors 1117 ist mit einem sechsten elektrischen Knoten 1118 gekoppelt. Der sechste elektrische Knoten 1118 ist mit dem vierten Eingang 1104 des Zähler-Elements 1100 gekoppelt. Ferner ist der sechste elektrische Knoten 1118 identisch mit einem siebten elektrischen Knoten 1119 Der andere Source-/Drain-Bereich des fünften Transistors 1117 ist mit dem einen Source-/Drain-Bereich eines sechsten Transistors 1120 gekoppelt. Der Gate-Bereich des sechsten Transistors 1120 ist mit einem achten elektrischen Knoten 1121 gekoppelt. Der achte elektrische Knoten 1121 ist mit dem zweiten Eingang 1102 des Zähler-Elements 1100 gekoppelt. Ferner ist der achte elektrische Knoten 1121 mit dem Gate-Bereich eines siebten Transistors 1122 gekoppelt. Der eine Source-/Drain-Bereich des siebten Transistors 1122 ist mit dem einen Source-/Drain-Bereich eines achten Transistors 1123 gekoppelt. Der Gate-Bereich des achten Transistors 1123 ist mit einem neunten elektrischen Knoten 1124 gekoppelt. Der neunte elektrische Knoten 1124 ist identisch mit dem zweiten elektrischen Knoten 1111. Der andere Source-/Drain-Bereich des achten Transistors 1123 ist mit einem zehnten elektrischen Knoten 1125 gekoppelt. Der zehnte elektrische Knoten 1125 ist identisch mit einem elften elektrischen Knoten 1126. Der elfte elektrische Knoten 1126 ist mit dem einen Source-/Drain-Bereich eines neunten Transistors 1127 gekoppelt. Der Gate-Bereich des neunten Transistors 1127 ist mit einem zwölften elektrischen Knoten 1128 gekoppelt. Der zwölfte elektrische Knoten 1128 ist mit dem fünften Eingang 1105 des Zähler-Elements 1100 gekoppelt. Der elfte elektrische Knoten 1126 ist mit dem einen Source-/Drain-Bereich eines zehnten Transistors 1129 gekoppelt. Der Gate-Bereich des zehnten Transistors 1129 ist mit dem vierten elektrischen Knoten 1115 gekoppelt. Der andere Source-/Drain-Bereich des zehnten Transistors 1129 ist mit einem dreizehnten elektrischen Knoten 1130 gekoppelt. Der dreizehnte elektrische Knoten 1130 ist identisch mit einem vierzehnten elektrischen Knoten 1131. Der vierzehnte elektrische Knoten 1131 ist mit dem zweiten Ausgang 1107 des Zähler-Elements 1100 gekoppelt. Ferner ist der dreizehnte elektrische Knoten 1130 mit dem Gate-Bereich des vierten Transistors 1114 gekoppelt. Der andere Source-/Drain-Bereich des vierten Transistors 1114 ist mit einem fünfzehnten elektrischen Knoten 1132 gekoppelt. Der fünfzehnte elektrische Knoten 1132 ist identisch mit einem sechzehnten elektrischen Knoten 1133. Der sechzehnte elektrische Knoten 1133 ist mit dem einen Source-/Drain-Bereich eines elften Transistors 1134 gekoppelt. Der sechzehnte elektrische Knoten 1133 ist ferner mit dem Gate-Bereich eines zwölften Transistors 1135 gekoppelt. Der eine Source-/Drain-Bereich des zwölften Transistors 1135 ist mit dem zehnten elektrischen Knoten 1125 gekoppelt. Der Gate-Bereich des elften Transistors 1134 ist mit dem siebten elektrischen Knoten 1119 gekoppelt. Der andere Source-/Drain-Bereich des elften Transistors 1134 ist mit dem einen Source-/Drain-Bereich eines dreizehnten Transistors 1136 gekoppelt. Der Gate-Bereich des dreizehnten Transistors 1136 ist mit dem ersten elektrischen Knoten 1108 gekoppelt. Der andere Source-/Drain-Bereich des zwölften Transistors 1135 ist mit einem siebzehnten elektrischen Knoten 1137 gekoppelt. Der siebzehnte elektrische Knoten 1137 ist identisch mit einem achtzehnten elektrischen Knoten 1138. Ferner ist der siebzehnte elektrische Knoten 1137 mit dem ersten Ausgang 1106 des Zähler-Elements 1100 gekoppelt. Der Gate-Bereich des dritten Transistors 1113 ist ferner mit dem achtzehnten elektrischen Knoten 1138 gekoppelt. Der fünfte elektrische Knoten 1116 ist identisch mit einem neunzehnten elektrischen Knoten 1139. Der neunzehnte elektrische Knoten 1139 ist mit dem einen Source-/Drain-Bereich eines vierzehnten Transistors 1140 gekoppelt. Der Gate-Bereich des vierzehnten Transistors 1140 ist mit einem zwanzigsten elektrischen Knoten 1141 gekoppelt. Der zwanzigste elektrische Knoten 1140 ist mit dem Gate-Bereich eines fünfzehnten Transistors 1142 gekoppelt. Der neunzehnte elektrische Knoten 1139 ist mit dem einen Source-/Drain-Bereich des fünfzehnten Transistors 1142 gekoppelt. Der Gate-Bereich des vierzehnten Transistors 1140 ist mit einem einundzwanzigsten elektrischen Knoten 1143 gekoppelt. Ein zweiundzwanzigster elektrischen Knoten 1144 ist identisch mit dem neunzehnten elektrischen Knoten 1139. Der zweiundzwanzigste elektrische Knoten 1143 ist mit dem einen Source-/Drain-Bereich eines sechzehnten Transistors 1145 gekoppelt. Der Gate-Bereich des sechzehnten Transistors 1145 ist mit dem zweiundzwanzigsten elektrischen Knoten 1144 gekoppelt. Der Gate-Bereich eines siebzehnten Transistors 1146 ist mit dem zweiundzwanzigsten elektrischen Knoten 1144 gekoppelt. Der eine Source-/Drain-Bereich des siebzehnten Transistors 1146 ist mit dem einundzwanzigsten elektrischen Knoten 1143 gekoppelt. Der zweiundzwanzigste elektrische Knoten 1143 ist identisch mit dem fünfzehnten elektrischen Knoten 1132. Ferner ist der zweiundzwanzigste elektrische Knoten 1144 mit dem Gate-Bereich eines siebzehnten Transistors 1146 gekoppelt, wobei der eine Source-/Drain-Bereich des siebzehnten Transistors 1146 mit dem einundzwanzigsten elektrischen Knoten 1143 gekoppelt ist. Der neunzehnte elektrische Knoten 1138 ist identisch mit einem dreiundzwanzigsten elektrischen Knoten 1147. Der dreiundzwanzigste elektrische Knoten 1147 ist mit dem einen Source-/Drain-Bereich eines achtzehnten Transistors 1148 gekoppelt. Der Gate-Bereich des achtzehnten Transistors 1148 ist mit einem vierundzwanzigsten elektrischen Knoten 1149 gekoppelt. Der vierundzwanzigste elektrische Knoten 1149 ist mit dem Gate-Bereich eines neunzehnten Transistors 1150 gekoppelt. Der dreiundzwanzigste elektrische Knoten 1147 ist mit dem einen Source-/Drain-Bereich des neunzehnten Transistors 1150 gekoppelt. Der Gate-Bereich des achtzehnten Transistors 1148 ist mit einem fünfundzwanzigsten elektrischen Knoten 1151 gekoppelt. Der fünfundzwanzigste elektrische Knoten 1151 ist mit dem einen Source-/Drain-Bereich eines zwanzigsten Transistors 1152 gekoppelt. Der Gate-Bereich des zwanzigsten Transistors 1152 ist mit einem sechsundzwanzigsten elektrischen Knoten 1153 gekoppelt. Der sechsundzwanzigste elektrische Knoten 1153 ist identisch mit dem dreiundzwanzigsten elektrischen Knoten 1147. Der fünfundzwanzigste elektrische Knoten 1151 ist mit dem einen Source-/Drain-Bereich eines einundzwanzigsten Transistors 1154 gekoppelt. Der Gate-Bereich des einundzwanzigsten Transistors 1154 ist mit dem sechsundzwanzigsten elektrischen Knoten 1153 gekoppelt. Der fünfundzwanzigste elektrische Knoten 1151 ist identisch mit dem vierzehnten elektrischen Knoten 1131. Der erste elektrische Knoten 1108 ist mit dem Gate-Bereich des dreizehnten Transistors 1136 gekoppelt.

In **Fig.12** ist ein bevorzugtes Ausführungsbeispiel der erfindungsgemäßen Sensor-Anordnung 1200 mit einer Mehrzahl von auf einem Chip 1202 matrixförmig angeordneten Schaltkreis-Anordnungen 1201 (von denen jede wie die in **Fig.7** gezeigte Schaltkreis-Anordnung 700 ausgestaltet sein kann) gezeigt. Jede der Schaltkreis-Anordnungen 1200 kann unabhängig von den anderen als Sensor betrieben werden. Sind die Schaltkreis-Anordnungen 1200 als Sensoren zum Nachweis unterschiedlicher Moleküle ausgestaltet (z.B. jede weist mit einer speziellen Art von DNA-Strängen hybridisierbare Fängermoleküle auf), so ist mittels der Sensor-Anordnung 1200 eine parallele Analyse einer zu untersuchenden Flüssigkeit möglich. Am Rande der matrixförmigen Anordnung von Sensor-Elektroden befinden sich hierbei Schaltungseinheiten, die zur Ansteuerung, zur Spannungs- sowie Stromversorgung und zum Auslesen der Sensorzellen dienen.

Diese Schaltungseinheiten liefern beispielsweise den Referenzstrom 621a zur Kalibrierung der einzelnen Sensorfelder, Versorgungs- und Referenz-Spannungen für die in den Sensor-Elementen enthaltene Regel-Einheit 602 und Komparator-Einheit 603, sowie die digitalen Steuersignale für den Zähler 736. Dies sind insbesondere ein Rücksetzsignal für den Zähler, ein Umschaltsignal für den Zähler-/Schieberegisterbetrieb, sowie gegebenenfalls ein Umschaltesignal für dem ersten Kondensator 604 parallelgeschaltete weitere Kondensatoren. Insbesondere enthalten die Einheiten am Rande der Matrix die Schaltungen zur Vorauswertung der gemessenen Signale, insbesondere zum Auslesen, Speichern und Weiterverarbeitung der Zählerinhalte der einzelnen Sensor-Elemente.

Die Vorteile der erfindungsgemäßen Sensor-Schaltung kommen bei einer Anordnung einer Vielzahl von Sensor-Einheiten auf einem Halbleiterchip besonders zum tragen, da jedes Sensor-Element in der Lage ist, autark das Strom-Signal der Sensorelektroden zu messen und in Form eines digitalen Zählersignals innerhalb des Sensorelements zu speichern. Gleichzeitig wird das Elektroden-Potential auf dem Soll-Potential konstant gehalten. Dieses Zählersignal kann dann zu einem beliebigen Zeitpunkt mittels der Schaltungseinheiten am Rande der Matrix abgefragt und weiterverarbeitet werden.

Aufgrund der hohen Wortbreite des Binärzählers 736 ist es zweckmäßig, den Zählerstand aus den Sensorelementen seriell auszulesen, da bei parallelem Auslesen sehr breite Datenbusse über die gesamte Matrix geführt werden müssten. Die serielle Ausgabe des Zählerstandes erfolgt durch Umschalten des Binärzählers 736 aus der Zählerbetriebsart in die Schieberegisterbetriebsart. Durch Anlegen eines Taktsignals wird dann der Zählerinhalt, das heißt die einzelnen Datenbits in den Zählerstufen sukzessive in die jeweils nachfolgende Zählerstufe weitergeschoben, so daß am Ausgang des Zählers nach n Taktimpulsen alle Datenbits eines n-stufigen Zählers ausgegeben werden. Die Anzahl der notwendigen Zählerstufen hängt direkt mit dem geforderten Dynamikumfang zusammen. Soll beispielsweise ein Messsignal mit einer Genauigkeit von 6 bit in einem Messbereich von 5 Dekaden erfasst werden, ist ein Zähler mit einer Wortbreite von 23 bit notwendig. Die Verwendung serieller Protokolle zur Datenübermittlung ist insbesondere auch deshalb vorteilhaft, da dadurch gleichzeitig die Kommunikation mit dem Auslesegerät, in das der Chip eingesetzt wird, vereinfacht ist.

Die Verwendung einer Zählerschaltung innerhalb der Sensoreinheit ist nicht zwingend notwendig, stattdessen kann beispielsweise auch direkt das Ausgangssignal des Pulsgebers 613 ausgegeben werden, in dem die gemessene Stromstärke an den Sensorelektroden in Form einer Frequenz codiert ist. Die Schaltungseinheiten am Rande der Matrix dienen dann dazu, die Frequenzen bzw. Pulsdauern der einzelnen Sensoreinheiten zu messen und weiter zu verarbeiten.

In diesem Dokument sind folgende Veröffentlichungen zitiert:

[1] Hintsche, R, Paeschke, M, Uhlig, A, Seitz, R (1997) "Microbiosensors using Electrodes made in Sitechnology", Frontiers in Biosensorics, Fundamental Aspects, Scheller, FW, Schubert, F, Fedrowitz, J (eds.), Birkhauser Verlag Basel, Schweiz, S.267-283

[2] van Gerwen, P (1997) "Nanoscaled Interdigitated Electrode Arrays for Biochemical Sensors", IEEE, International Conference on Solid-State Sensors and Actuators, 16.-19. Juni 1997, Chicago, S.907-910

[3] Paeschke, M, Dietrich, F, Uhlig, A, Hintsche, R (1996) "Voltammetric Multichannel Measurements Using Silicon Fabricated Microelectrode Arrays", Electroanalysis, Vol. 7, No.1, S.1-8

[4] Uster, M, Loeliger, T, Guggenbühl, W, Jäckel, H (1999) "Integrating ADC Using a Single Transistor as Integrator and Amplifier for Very Low (1fA Minimum) Input Currents", Advanced A/D and D/A Conversion Techniques and Their Applications, Konferenz der Universität Strathclyde (Großbritannien) 27.-28. Juli 1999, Conference Publication No. 466, S. 86-89, IEE

Bezugszeichenliste

| 100 | Schaltkreis-Anordnung |
| 101 | Sensor-Elektrode |
| 102 | erste Schaltungs-Einheit |
| 103 | zweite Schaltungs-Einheit |
| 104 | erster Kondensator |
| 105 | Fängermoleküle |
| 106 | zu erfassendes Molekül |
| 107 | Enzymlabel |
| 108 | elektrisch geladene Partikel |
| 109 | erste Regelungs-Einheit |
| 110 | regelbarer ohmscher Widerstand |
| 111 | zweite Regelungs-Einheit |
| 112 | Puls |
| 113 | weiterer Schalter |
| 114 | Spannungsquelle |
| 200 | Sensor |
| 201 | Elektrode |
| 202 | Elektrode |
| 203 | Isolator |
| 204 | Elektrodenanschluss |
| 205 | Elektrodenanschluss |
| 206 | DNA-Sondenmolekül |
| 207 | Elektrolyt |
| 208 | DNA-Stränge |
| 300 | Interdigitalelektrode |
| 400 | Biosensor |
| 401 | erste Elektrode |
| 402 | zweite Elektrode |
| 403 | Isolatorschicht |
| 404 | Haltebereich erste Elektrode |
| 405 | DNA-Sondenmolekül |
| 406 | Elektrolyt |
| 407 | DNA-Strang |
| 408 | Enzym |
| 409 | spaltbares Molekül |
| 410 | negativ geladenes erstes Teilmolekül |
| 411 | Pfeil |
| 412 | weitere Lösung |
| 413 | oxidiertes erstes Teilmolekül |
| 414 | reduziertes erstes Teilmolekül |
| 500 | Diagramm |
| 501 | elektrischer Strom |
| 502 | Zeit |
| 503 | Kurvenverlauf Strom Zeit |
| 504 | Offset-Strom |
| 600 | Schaltkreis-Anordnung |
| 601 | Sensor-Elektrode |
| 602 | erste Schaltungseinheit |
| 603 | zweite Schaltungseinheit |
| 604 | erster Kondensator |
| 605 | Knoten |
| 606 | Zähler-Element |
| 607 | erstes Komparator-Element |
| 608 | zweite Spannungsquelle |

| 609 | Transistor |
|---|---|
| 610 | zweites Komparator-Element |
| 611 | dritte Spannungsquelle |
| 612 | Schalter |
| 613 | Pulsgeber |
| 620 | Schaltkreis-Anordnung |
| 621 | Kalibrier-Einrichtung |
| 621a | Referenz-Stromquelle |
| 622 | weiterer Schalter |
| 700 | Schaltkreis-Anordnung |
| 701 | weitere Sensor-Elektrode |
| 702 | erster elektrischer Knoten |
| 703 | erster Transistor |
| 704 | zweiter elektrischer Knoten |
| 705 | erste Spannungsversorgung |
| 706 | dritter elektrischer Knoten |
| 707 | vierter elektrischer Knoten |
| 708 | erste Kapazität |
| 709 | fünfter elektrischer Knoten |
| 710 | sechster elektrischer Knoten |
| 711 | zweite Kapazität |
| 712 | zweite Spannungsversorgung |
| 713 | siebter elektrischer Knoten |
| 714 | achter elektrischer Knoten |
| 715 | dritte Kapazität |
| 716 | neunter elektrischer Knoten |
| 717 | zehnter elektrischer Knoten |
| 718 | elfter elektrischer Knoten |
| 719 | zwölfter elektrischer Knoten |
| 720 | dreizehnter elektrischer Knoten |
| 721 | vierte Kapazität |
| 722 | fünfte Kapazität |
| 723 | erste Spannungsversorgungs-Einheit |
| 724 | zweite Spannungsversorgungs-Einheit |
| 725 | vierzehnter elektrischer Knoten |
| 726 | fünfzehnter elektrischer Knoten |
| 727 | dritte Spannungsversorgung |
| 728 | vierte Spannungsversorgung |
| 729 | erstes Steuersignal |
| 730 | zweites Steuersignal |
| 731 | drittes Steuersignal |
| 732 | viertes Steuersignal |
| 733 | fünftes Steuersignal |
| 734 | sechstes Steuersignal |
| 735 | siebtes Steuersignal |
| 736 | Zähler-Einheit |
| 737 | sechzehnter elektrischer Knoten |
| 738 | siebzehnter elektrischer Knoten |
| 739 | achtzehnter elektrischer Knoten |
| 740 | neunzehnter elektrischer Knoten |
| 741 | zwanzigster elektrischer Knoten |
| 742 | einundzwanzigster elektrischer Knoten |
| 743 | zweiundzwanzigster elektrischer Knoten |
| 744 | sechste Kapazität |
| 745 | dreiundzwanzigster elektrischer Knoten |
| 746 | siebte Kapazität |
| 747 | vierundzwanzigster elektrischer Knoten |
| 748 | Ausgangs-Anschluss |

| | |
|---|---|
| 800 | nicht-invertierter Eingang |
| 801 | erster elektrischer Knoten |
| 803 | invertierter Eingang |
| 804a | erster Anschluss |
| 804b | zweiter Anschluss |
| 804c | dritter Anschluss |
| 805 | Ausgang |
| 806 | zweiter elektrischer Knoten |
| 807 | Kondensator |
| 808 | dritter elektrischer Knoten |
| 810 | Ausgangs-Anschluss |
| 900 | erster elektrischer Knoten |
| 901 | erster Transistor |
| 902 | zweiter Transistor |
| 903 | zweiter elektrischer Knoten |
| 904 | dritter elektrischer Knoten |
| 905 | vierter elektrischer Knoten |
| 906 | fünfter elektrischer Knoten |
| 907 | sechster elektrischer Knoten |
| 908 | dritter Transistor |
| 909 | vierter Transistor |
| 910 | siebter elektrischer Knoten |
| 911 | achter elektrischer Knoten |
| 912 | neunter elektrischer Knoten |
| 913 | fünfter Transistor |
| 914 | zehnter elektrischer Knoten |
| 915 | elfter elektrischer Knoten |
| 916 | sechster Transistor |
| 917 | zwölfter elektrischer Knoten |
| 918 | siebter Transistor |
| 919 | dreizehnter elektrischer Knoten |
| 920 | achter Transistor |
| 921 | vierzehnter elektrischer Knoten |
| 922 | neunter Transistor |
| 923 | fünfzehnter elektrischer Knoten |
| 924 | zehnter Transistor |
| 925 | sechzehnter elektrischer Knoten |
| 926 | siebzehnter elektrischer Knoten |
| 927 | elfter Transistor |
| 1000 | erster Eingang |
| 1001 | zweiter Eingang |
| 1002 | Ausgang |
| 1003 | Versorgungs-Eingang |
| 1004 | erster Transistor |
| 1005 | erster elektrischer Knoten |
| 1006 | zweiter Transistor |
| 1007 | zweiter elektrischer Knoten |
| 1008 | dritter Transistor |
| 1009 | dritter elektrischer Knoten |
| 1010 | vierter Transistor |
| 1011 | vierter elektrischer Knoten |
| 1012 | fünfter Transistor |
| 1013 | fünfter elektrischer Knoten |
| 1014 | sechster Transistor |
| 1015 | siebter Transistor |
| 1016 | sechster elektrischer Knoten |
| 1017 | achter Transistor |
| 1018 | siebter elektrischer Knoten |

| | |
|---|---|
| 1019 | neunter Transistor |
| 1020 | zehnter Transistor |
| 1021 | achter elektrischer Knoten |
| 1022 | neunter elektrischer Knoten |
| 1023 | elfter Transistor |
| 1024 | zwölfter Transistor |
| 1100 | Zähler-Element |
| 1101 | erster Eingang |
| 1102 | zweiter Eingang |
| 1103 | dritter Eingang |
| 1104 | vierter Eingang |
| 1105 | fünfter Eingang |
| 1106 | erster Ausgang |
| 1107 | zweiter Ausgang |
| 1108 | erster elektrischer Knoten |
| 1109 | erster Transistor |
| 1110 | zweiter Transistor |
| 1111 | zweiter elektrischer Knoten |
| 1112 | dritter elektrischer Knoten |
| 1113 | dritter Transistor |
| 1114 | vierter Transistor |
| 1115 | vierter elektrischer Knoten |
| 1116 | fünfter elektrischer Knoten |
| 1117 | fünfter Transistor |
| 1118 | sechster elektrischer Knoten |
| 1119 | siebter elektrischer Knoten |
| 1120 | sechster Transistor |
| 1121 | achter elektrischer Knoten |
| 1122 | siebter Transistor |
| 1123 | achter Transistor |
| 1124 | neunter elektrischer Knoten |
| 1125 | zehnter elektrischer Knoten |
| 1126 | elfter elektrischer Knoten |
| 1127 | neunter Transistor |
| 1128 | zwölfter elektrischer Knoten |
| 1129 | zehnter Transistor |
| 1130 | dreizehnter elektrischer Knoten |
| 1131 | vierzehnter elektrischer Knoten |
| 1132 | fünfzehnter elektrischer Knoten |
| 1133 | sechzehnter elektrischer Knoten |
| 1134 | elfter Transistor |
| 1135 | zwölfter Transistor |
| 1136 | dreizehnte Transistor |
| 1137 | siebzehnter elektrischer Knoten |
| 1138 | achtzehnter elektrischer Knoten |
| 1139 | neunzehnter elektrischer Knoten |
| 1140 | vierzehnter Transistor |
| 1141 | zwanzigster elektrischer Knoten |
| 1142 | fünfzehnter Transistor |
| 1143 | einundzwanzigster elektrischer Knoten |
| 1144 | zweiundzwanzigster elektrischer Knoten |
| 1145 | sechzehnter Transistor |
| 1146 | siebzehnter Transistor |
| 1147 | dreiundzwanzigster elektrischer Knoten |
| 1148 | achtzehnter Transistor |
| 1149 | vierundzwanzigster elektrischer Knoten |
| 1150 | neunzehnter Transistor |
| 1151 | fünfundzwanzigster elektrischer Knoten |

1152 zwanzigster Transistor
1153 sechsundzwanzigster elektrischer Knoten
1154 einundzwanzigster Transistor
1200 Sensor-Anordnung
1201 Schaltkreis-Anordnung
1202 Chip

**Patentansprüche**

1. Schaltkreis-Anordnung (600)

   • mit einer Sensor-Elektrode(601);
   • mit einer ersten Schaltungseinheit (602), die mit der Sensor-Elektrode elektrisch gekoppelt ist;
   • mit einer zweiten Schaltungseinheit (603), die einen ersten Kondensator (604) aufweist;
   • wobei die erste Schaltungseinheit (602) derart eingerichtet ist, dass sie das elektrische Potential der Sensor-Elektrode (601) in einem vorgebbaren ersten Referenz-Bereich um ein vorgebbares elektrisches Soll-Potential hält, indem der erste Kondensator (604) und die Sensor-Elektrode derart gekoppelt werden, dass ein Angleichen des elektrischen Potentials ermöglicht ist;
   • wobei die zweite Schaltungseinheit (603) derart eingerichtet ist, dass sie, wenn das elektrische Potential des ersten Kondensators (604) außerhalb eines zweiten Referenz-Bereichs ist,

      o dieses Ereignis detektiert; und
      o den ersten Kondensator (604) auf ein erstes elektrisches Referenz-Potential bringt.

2. Schaltkreis-Anordnung nach Anspruch 1,
   die ein mit der zweiten Schaltungseinheit (603) elektrisch gekoppeltes Zähler-Element (606) aufweist, das derart eingerichtet ist, dass es die Anzahl und/oder die zeitliche Abfolge der Ereignisse zählt.

3. Schaltkreis-Anordnung nach Anspruch 2,
   bei der das Zähler-Element derart eingerichtet ist, dass es die zeitliche Abfolge der Ereignisse in mindestens zwei Zeitintervallen in einem zeitlichen Abstand voneinander erfasst.

4. Schaltkreis-Anordnung nach einem der Ansprüche 1 bis 3,
   die eine mit der ersten Schaltungseinheit (602) koppelbare Kalibrier-Einrichtung (621) zum Kalibrieren der Schaltkreis-Anordnung aufweist, die derart eingerichtet ist, dass mittels der Kalibrier-Einrichtung an die erste Schaltungseinheit ein zweites elektrisches Referenz-Potential anlegbar ist, wobei die erste Schaltungseinheit entweder mit der Kalibrier-Einrichtung oder mit der Sensor-Elektrode (601) gekoppelt ist.

5. Schaltkreis-Anordnung nach einem der Ansprüche 1 bis 4, bei welcher die erste Schaltungseinheit (602) ein erstes Komparator-Element (607) mit zwei Eingängen und einem Ausgang aufweist, wobei

   • der erste Eingang derart mit der Sensor-Elektrode (601) gekoppelt ist, dass der erste Eingang auf dem elektrischen Potential der Sensor-Elektrode (601) ist;
   • der zweite Eingang auf ein drittes elektrisches Referenz-Potential gebracht ist, welches das elektrische Soll-Potential definiert;
   • das erste Komparator-Element (607) derart eingerichtet ist, dass an dessen Ausgang ein derartiges elektrisches Signal erzeugt wird dass das elektrische Potential der Sensor-Elektrode (601) in dem vorgebbaren ersten Referenz-Bereich um das vorgebbare elektrische Soll-Potential gehalten wird.

6. Schaltkreis-Anordnung nach einem der Ansprüche 1 bis 5,
   bei der die erste Schaltungs-Einheit (602) einen veränderbaren ohmschen Widerstand aufweist, mittels welchem die Sensor-Elektrode (601) mit dem ersten Kondensator (604) der zweiten Schaltungs-Einheit (603) derart koppelbar ist, dass das Potential der Sensor-Elektrode in dem vorgebbaren ersten Referenz-Bereich um das vorgebbare elektrische Soll-Potential gehalten wird.

7. Schaltkreis-Anordnung nach Anspruch 5 oder 6,
   bei welcher die erste Schaltungseinheit einen Transistor (609) aufweist, dessen Gate-Bereich mit dem Ausgang des ersten Komparator-Elements (607) gekoppelt ist, dessen erster Source-/Drain-Bereich mit der Sensor-Elektrode gekoppelt ist und dessen zweiter Source-/Drain-Bereich mit dem ersten Kondensator (604) gekoppelt ist.

8. Schaltkreis-Anordnung nach einem der Ansprüche 1 bis 7,
bei welcher die zweite Schaltungseinheit (603) ein zweites Komparator-Element (610) mit zwei Eingängen und einem Ausgang aufweist, wobei

• der erste Eingang derart mit dem ersten Kondensator (604) gekoppelt ist, dass der erste Eingang auf dem elektrischen Potential des ersten Kondensators ist;
• der zweite Eingang auf einem vierten elektrischen Referenz-Potential ist, das den zweiten elektrischen Referenz-Bereich definiert;
• das zweite Komparator-Element (610) derart eingerichtet ist, dass an dessen Ausgang ein derartiges elektrisches Signal erzeugt wird, dass, wenn das elektrische Potential des ersten Kondensators (604) das vierte elektrische Referenz-Potential überschreitet, der erste Kondensator auf das erste elektrische Referenz-Potential gebracht wird.

9. Schaltkreis-Anordnung nach einem der Ansprüche 1 bis 8,
bei welcher die zweite Schaltungseinheit (603) ein zweites Komparator-Element mit zwei Eingängen und einem Ausgang aufweist, wobei

• der erste Eingang derart mit dem ersten Kondensator (604) gekoppelt ist, dass der erste Eingang auf dem elektrischen Potential des ersten Kondensators ist;
• der zweite Eingang auf einem vierten elektrischen Referenz-Potential ist, das den zweiten elektrischen Referenz-Bereich definiert;
• das zweite Komparator-Element (610) derart eingerichtet ist, dass an dessen Ausgang ein derartiges elektrisches Signal erzeugt wird, dass, wenn das elektrische Potential des ersten Kondensators (604) das vierte elektrische Referenz-Potential unterschreitet, der erste Kondensator auf das erste elektrische Referenz-Potential gebracht wird.

10. Schaltkreis-Anordnung nach einem der Ansprüche 5 bis 9,
bei der das erste und/oder das zweite Komparator-Element ein Operations-Verstärker ist.

11. Schaltkreis-Anordnung nach einem der Ansprüche 1 bis 10,
bei der die zweite Schaltungseinheit mindestens einen zweiten Kondensator aufweist, wobei die Schaltkreis-Anordnung derart eingerichtet ist, dass entweder einer der mindestens einen zweiten Kondensatoren oder der erste Kondensator oder mindestens zwei der Kondensatoren simultan der Schaltkreis-Anordnung zugeschaltet ist/sind.

12. Schaltkreis-Anordnung nach einem der Ansprüche 1 bis 11,
die als integrierter Schaltkreis ausgebildet ist.

13. Elektrochemischer Sensor mit
einer Schaltkreis-Anordnung nach einem der Ansprüche 1 bis 12.

14. Sensor-Anordnung mit
einer Mehrzahl von Schaltkreis-Anordnungen nach einem der Ansprüche 1 bis 12.

15. Sensor-Anordnung nach Anspruch 14,
bei der jede der Schaltkreis-Anordnungen als autark arbeitendes Sensor-Element eingerichtet ist.

16. Sensor-Anordnung nach Anspruch 14 oder 15,
bei der die Schaltkreis-Anordnungen im Wesentlichen matrixförmig angeordnet sind.

17. Sensor-Anordnung nach einem der Ansprüche 14 bis 16 mit

• einem zentralen Ansteuer-Schaltkreis
• einem zentralen Versorgungs-Schaltkreis und/oder
• einem zentralen Auslese-Schaltkreis,

welcher Schaltkreis/welche Schaltkreise mit zumindest einem Teil der Schaltkreis-Anordnungen gekoppelt ist/sind.

**18.** Verfahren zum Verarbeiten eines über eine Sensor-Elektrode bereitgestellten Stromsignals

  • mit einer Schaltkreis-Anordnung (600)

    o mit einer Sensor-Elektrode (601);
    o mit einer ersten Schaltungseinheit (602), die mit der Sensor-Elektrode elektrisch gekoppelt ist;
    o mit einer zweiten Schaltungseinheit (603), die einen ersten Kondensator (604) aufweist;
    o wobei die erste Schaltungseinheit (602) derart eingerichtet ist, dass sie das elektrische Potential der Sensor-Elektrode (601) in einem vorgebbaren ersten Referenz-Bereich um ein vorgebbares elektrisches Soll-Potential hält, indem der erste Kondensator (604) und die Sensor-Elektrode (601) derart gekoppelt werden, dass ein Angleichen des elektrischen Potentials ermöglicht ist;
    o wobei die zweite Schaltungseinheit (603) derart eingerichtet ist, dass sie, wenn das elektrische Potential des ersten Kondensators (604) außerhalb eines zweiten Referenz-Bereichs ist,

      ■ dieses Ereignis detektiert; und
      ■ den ersten Kondensator (604) auf ein erstes elektrisches Referenz-Potential bringt;

  • wobei gemäß dem Verfahren

    o das elektrische Potential der Sensor-Elektrode (601) in dem vorgebbaren ersten Referenz-Bereich um das vorgebbare elektrische Soll-Potential gehalten wird, indem der erste Kondensator (604) und die Sensor-Elektrode (601) derart gekoppelt werden, dass ein Angleichen des elektrischen Potentials ermöglicht ist;
    o wenn das elektrische Potential des ersten Kondensators (604) außerhalb des zweiten Referenz-Bereichs ist, mittels der zweiten Schaltungseinheit (603)

      ■ dieses Ereignis detektiert wird; und
      ■ der erste Kondensator (604) auf das erste elektrische Referenz-Potential gebracht wird.

**19.** Verfahren nach Anspruch 18,
bei dem mittels eines mit der zweiten Schaltungseinheit (603) elektrisch gekoppelten Zähler-Elements (606) die Anzahl und/oder die zeitliche Abfolge der Ereignisse gezählt werden.

**20.** Verfahren nach Anspruch 19,
bei dem mittels des Zähler-Elements (606) die zeitliche Abfolge der Ereignisse in mindestens zwei Zeitintervallen in einem zeitlichen Abstand voneinander erfasst wird.


**Claims**

**1.** A circuit arrangement (600)

  • having a sensor electrode (601);
  • having a first circuit unit (602), which is electrically coupled to the sensor electrode;
  • having a second circuit unit (603), which has a first capacitor (604);
  • the first circuit unit (602) being set up in such a way that it holds the electrical potential of the sensor electrode (601) in a predeterminable first reference range around a predeterminable electrical desired potential by coupling the first capacitor (604) and the sensor electrode in such a way that a matching of the electrical potential is made possible;
  • the second circuit unit (603) being set up in such a way that, if the electrical potential of the first capacitor (604) is outside a second reference range, said second circuit unit

    ○ detects this event; and
    ○ brings the first capacitor (604) to a first electrical reference potential.

**2.** The circuit arrangement as claimed in claim 1,
which has a counter element (606) that is electrically coupled to the second circuit unit (603) and is set up in such a way that it counts the number and/or the temporal sequence of the events.

3. The circuit arrangement as claimed in claim 2,
in which the counter element is set up in such a way that it registers the temporal sequence of the events in at least two time intervals at a temporal distance from one another.

4. The circuit arrangement as claimed in one of claims 1 to 3,
which has a calibration device (621) that can be coupled to the first circuit unit (602) and serves for calibrating the circuit arrangement, which is set up in such a way that a second electrical reference potential can be applied to the first circuit unit by means of the calibration device, the first circuit unit being coupled either to the calibration device or to the sensor electrode (601).

5. The circuit arrangement as claimed in one of claims 1 to 4,
in which the first circuit unit (602) has a first comparator element (607) having two inputs and an output,

   • the first input being coupled to the sensor electrode (601) in such a way that the first input is at the electrical potential of the sensor electrode (601);
   • the second input being brought to a third electrical reference potential, which defines the electrical desired potential;
   • the first comparator element (607) being set up in such a way that an electrical signal is generated at its output such that the electrical potential of the sensor electrode (601) is held in the predeterminable first reference range around the predeterminable electrical desired potential.

6. The circuit arrangement as claimed in one of claims 1 to 5,
in which the first circuit unit (602) has a variable nonreactive resistor, by means of which the sensor electrode (601) can be coupled to the first capacitor (604) of the second circuit unit (603) in such a way that the potential of the sensor electrode is held in the predeterminable first reference range around the predeterminable electrical desired potential.

7. The circuit arrangement as claimed in claim 5 or 6,
in which the first circuit unit has a transistor (609), the gate region of which is coupled to the output of the first comparator element (607), the first source/drain region of which is coupled to the sensor electrode and the second source/drain region of which is coupled to the first capacitor (604).

8. The circuit arrangement as claimed in one of claims 1 to 7,
in which the second circuit unit (603) has a second comparator element (610) having two inputs and an output,

   • the first input being coupled to the first capacitor (604) in such a way that the first input is at the electrical potential of the first capacitor;
   • the second input being at a fourth electrical reference potential, which defines the second electrical reference range;
   • the second comparator element (610) being set up in such a way that an electrical signal is generated at its output such that, if the electrical potential of the first capacitor (604) exceeds the fourth electrical reference potential, the first capacitor (604) is brought to the first electrical reference potential.

9. The circuit arrangement as claimed in one of claims 1 to 8,
in which the second circuit unit (603) has a second comparator element having two inputs and an output,

   • the first input being coupled to the first capacitor (604) in such a way that the first input is at the electrical potential of the first capacitor;
   • the second input being at a fourth electrical reference potential, which defines the second electrical reference range;
   • the second comparator element (610) being set up in such a way that an electrical signal is generated at its output such that, if the electrical potential of the first capacitor (604) falls below the fourth electrical reference potential, the first capacitor is brought to the first electrical reference potential.

10. The circuit arrangement as claimed in one of claims 5 to 9,
in which the first and/or the second comparator element is an operational amplifier.

11. The circuit arrangement as claimed in one of claims 1 to 10,
in which the second circuit unit has at least one second capacitor, the circuit arrangement being set up in such a way that either one of the at least one second capacitors or the first capacitor or at least two of the capacitors is/are simultaneously connected into the circuit arrangement.

12. The circuit arrangement as claimed in one of claims 1 to 11,
which is designed as an integrated circuit.

13. An electrochemical sensor having
a circuit arrangement as claimed in one of claims 1 to 12.

14. A sensor arrangement having
a plurality of circuit arrangements as claimed in one of claims 1 to 12.

15. The sensor arrangement as claimed in claim 14,
in which each of the circuit arrangements is set up as an autonomously operating sensor element.

16. The sensor arrangement as claimed in claim 14 or 15,
in which the circuit arrangements are essentially arranged in matrix form.

17. The sensor arrangement as claimed in one of claims 14 to 16 having

    • a central drive circuit,
    • a central supply circuit and/or
    • a central read-out circuit,

which circuit/which circuits is/are coupled to at least one portion of the circuit arrangements.

18. A method for processing a current signal provided via a sensor electrode,

    • having a circuit arrangement (600)

        ○ having a sensor electrode (601);
        ○ having a first circuit unit (602), which is electrically coupled to the sensor electrode;
        ○ having a second circuit unit (603), which has a first capacitor (604);
        ○ the first circuit unit (602) being set up in such a way that it holds the electrical potential of the sensor electrode (601) in a predeterminable first reference range around a predeterminable electrical desired potential by coupling the first capacitor (604) and the sensor electrode (601) in such a way that a matching of the electrical potential is made possible;
        ○ the second circuit unit (603) being set up in such a way that, if the electrical potential of the first capacitor (604) is outside a second reference range, said second circuit unit

            ■ detects this event; and
            ■ brings the first capacitor (604) to a first electrical reference potential;

    • in which case, in accordance with the method,

        ○ the electrical potential of the sensor electrode (601) is held in the predeterminable first reference range around the predeterminable electrical desired potential by the first capacitor (604) and the sensor electrode (601) being coupled in such a way that a matching of the electrical potential is made possible;
        ○ if the electrical potential of the first capacitor (604) is outside the second reference range, by means of the second circuit unit (603)

            ■ this event is detected; and
            ■ the first capacitor (604) is brought to the first electrical reference potential.

19. The method as claimed in claim 18,
in which the number and/or the temporal sequence of the events is counted by means of a counter element (606) electrically coupled to the second circuit unit (603).

**20.** The method as claimed in claim 19,
in which the counter element (606) is used to register the temporal sequence of the events in at least two time intervals at a temporal distance from one another.

**Revendications**

**1.** Montage (600)

• comprenant une électrode (601) de capteur ;
• comprenant une première unité (602) de circuit, qui est couplée électriquement à l'électrode de capteur ;
• comprenant une deuxième unité (603) de circuit, qui a un premier condensateur (604) ;
• dans lequel la première unité (602) de circuit est telle qu'elle maintient le potentiel électrique de l'électrode (601) de capteur dans une première plage de référence pouvant être prescrite autour d'un potentiel de consigne électrique qui peut être prescrit, en couplant le premier condensateur (604) et l'électrode de capteur, de manière à rendre possible une mise à niveau du potentiel électrique ;
• dans lequel la deuxième unité (603) de circuit est telle que, lorsque le potentiel électrique du premier condensateur (604) est en dehors d'une deuxième plage de référence,

- elle détecte cet évènement ; et
- elle porte le premier condensateur (604) à un premier potentiel de référence électrique.

**2.** Montage suivant la revendication 1,
qui a un élément (606) de compteur, couplé électriquement à la deuxième unité (603) de circuit, et tel qu'il compte le nombre et/ou la succession dans le temps des évènements.

**3.** Montage suivant la revendication 2,
dans lequel l'élément de compteur est tel qu'il relève la succession des évènements dans le temps pendant au moins deux intervalles de temps à une distance dans le temps l'un de l'autre.

**4.** Montage suivant l'une des revendications 1 à 3,
qui a un dispositif (621) d'étalonnage du montage, qui peut être couplé à la première unité (602) de circuit et qui est tel qu'au moyen du dispositif d'étalonnage il peut être appliqué un deuxième potentiel de référence électrique à la première unité de circuit, la première unité de circuit étant couplée au dispositif d'étalonnage ou à l'électrode (601) de capteur.

**5.** Montage suivant l'une des revendications 1 à 4,
dans lequel la première unité (602) de circuit a un premier élément (607) de comparateur ayant deux entrées et une sortie, dans lequel

• la première entrée est couplée à l'électrode (601) de capteur, de sorte que la première entrée est au potentiel électrique de l'électrode (601) de capteur ;
• la deuxième entrée est portée à un troisième potentiel de référence électrique, qui définit le potentiel de consigne électrique ;
• le premier élément (607) de comparateur est tel qu'il est produit à sa sortie un signal électrique tel que le potentiel électrique de l'électrode (601) de capteur est maintenu dans la première plage de référence pouvant être prescrite autour du potentiel de consigne électrique pouvant être prescrit.

**6.** Montage suivant l'une des revendications 1 à 5,
dans lequel la première unité (602) de circuit a une résistance ohmique variable au moyen de laquelle l'électrode (601) de capteur peut être couplée au premier condensateur (604) de la deuxième unité (603) de circuit, de façon à maintenir le potentiel de l'électrode de capteur dans la première plage de référence pouvant être prescrite autour du potentiel de consigne électrique pouvant être prescrit.

**7.** Montage suivant la revendication 5 ou 6,
dans lequel la première unité de circuit a un transistor (609) dont la zone de grille est couplée à la sortie du premier élément (607) de comparateur, dont la première zone de source/drain est couplée à l'électrode de capteur et dont la deuxième zone de source/drain est couplée au premier condensateur (604).

8. Montage suivant l'une des revendications 1 à 7, dans lequel la deuxième unité (603) de circuit a un deuxième élément (610) de comparateur ayant deux entrées et une sortie, dans lequel

   • la première entrée est couplée au premier condensateur (604), de sorte que la première entrée soit au potentiel électrique du premier condensateur ;
   • la deuxième entrée est à un quatrième potentiel de référence électrique, qui définit la deuxième plage de référence électrique ;
   • le deuxième élément (610) de comparateur est tel qu'il est produit à sa sortie un signal électrique tel que, lorsque le potentiel électrique du premier condensateur (604) dépasse le quatrième potentiel de référence électrique, le premier condensateur (604) est porté au premier potentiel de référence électrique.

9. Montage suivant l'une des revendications 1 à 8, dans lequel la deuxième unité (608) de circuit a un deuxième élément de comparateur ayant deux entrées et une sortie, dans lequel

   • la première entrée est couplée au premier condensateur (604), de sorte que la première entrée est au potentiel électrique du premier condensateur ;
   • la deuxième entrée est à un quatrième potentiel de référence électrique, qui définit la deuxième plage de référence électrique ;
   • le deuxième élément (610) de comparateur est tel qu'il est produit à sa sortie un signal électrique tel que, lorsque le potentiel électrique du premier condensateur (604) devient inférieur au quatrième potentiel de référence électrique, le premier condensateur est porté au premier potentiel de référence électrique.

10. Montage suivant l'une des revendications 5 à 9, dans lequel le premier et/ou le deuxième élément de comparateur est un amplificateur opérationnel.

11. Montage suivant l'une des revendications 1 à 10, dans lequel la deuxième unité de circuit a au moins un deuxième condensateur, le montage étant tel que soit l'un des au moins un deuxième condensateur ou le premier condensateur ou au moins deux des condensateurs, est ou sont mis en circuit simultanément dans le montage.

12. Montage suivant l'une des revendications 1 à 11, qui est constitué sous la forme d'un montage intégré.

13. Capteur électrochimique ayant un montage suivant l'une des revendications 1 à 12.

14. Dispositif de capteur ayant une multiplicité de montages suivant l'une des revendications 1 à 12.

15. Dispositif de capteur suivant la revendication 14, dans lequel chacun des montages est conçu en tant qu'élément de capteur fonctionnant de manière autonome.

16. Dispositif de capteur suivant la revendication 14 ou 15, dans lequel les montages sont disposés sensiblement sous forme de matrice.

17. Dispositif de capteur suivant l'une des revendications 14 à 16 comprenant

   • un circuit central de commande
   • un circuit central d'alimentation et/ou
   • un circuit central de lecture,

ce circuit/ces circuits étant couplés à au moins une partie des montages.

**18.** Procédé de traitement d'un signal de courant mis à disposition par une électrode de capteur

• comprenant un montage (600)

- ayant une électrode (601) de capteur;
- ayant une première unité (602) de circuit, qui est couplée électrique à l'électrode de capteur ;
- ayant une deuxième unité (603) de circuit, qui a un premier condensateur (604) ;
- dans lequel la première unité (602) de circuit est telle qu'elle maintient le potentiel électrique de l'électrode (601) de capteur dans une première plage de référence pouvant être prescrite autour d'un potentiel de consigne électrique qui peut être prescrit, en couplant le premier condensateur (604) et l'électrode (601) de capteur, de manière à rendre possible une mise à niveau du potentiel électrique ;
- dans lequel la deuxième unité (603) de circuit est telle que, lorsque le potentiel électrique du premier condensateur (604) est en dehors d'une deuxième plage de référence,

• elle détecte cet évènement ; et
• elle porte le premier condensateur (604) à un premier potentiel de référence électrique ;
• dans lequel, suivant le procédé

- on maintient le potentiel électrique de l'électrode (601) de capteur dans la première plage de référence qui peut être prescrite autour du potentiel de consigne électrique qui peut être prescrit en couplant le premier condensateur (604) et l'électrode (601) de capteur, de façon à permettre une mise à niveau du potentiel électrique ;
- si le potentiel électrique du premier condensateur (604) est en dehors de la deuxième plage de référence, au moyen de la deuxième unité (603) de circuit

• on détecte cet évènement ; et
• on porte le premier condensateur (604) au premier potentiel de référence électrique.

**19.** Procédé suivant la revendication 18,
dans lequel on compte, au moyen d'un élément (606) de compteur couplé électriquement à la deuxième unité (603) de circuit, le nombre et/ou la succession dans le temps des évènements.

**20.** Procédé suivant la revendication 19,
dans lequel, au moyen de l'élément (606) de compteur, on relève la succession dans le temps des évènements pendant au moins deux intervalles de temps à une distance dans le temps l'un de l'autre.

FIG 1

FIG 2A  Stand der Technik

FIG 2B  Stand der Technik

FIG 3A

FIG 3B  Stand der Technik

FIG 4A Stand der Technik

405

406

400

404

401

402

403

FIG 4B Stand der Technik

408

405

407

406

400

404

401

402

403

## FIG 4C Stand der Technik

## FIG 5 Stand der Technik

FIG 6A

FIG 6B

FIG 7

EP 1 472 548 B1

37

## FIG 8

804b

804a    804c

602

810

706

803

805    806    609

800

807

702

801    607    808

## FIG 12

1200

1202

1201    1201    ⋯    1201

⋯

⋮    ⋮    ⋮    ⋮

1201    1201    1201

⋯

# FIG 9

# FIG 10

FIG 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Microbiosensors using Electrodes made in Sitechnology. **HINTSCHE, R ; PAESCHKE, M ; UHLIG, A ; SEITZ, R.** Frontiers in Biosensorics, Fundamental Aspects. Birkhauser Verlag Basel, 1997, 267-283
- **VAN GERWEN, P.** Nanoscaled Interdigitated Electrode Arrays for Biochemical Sensors. *IEEE, International Conference on Solid-State Sensors and Actuators,* 1997, 907-910
- **PAESCHKE, M ; DIETRICH, F ; UHLIG, A ; HINTSCHE, R.** Voltammetric Multichannel Measurements Using Silicon Fabricated Microelectrode Arrays. *Electroanalysis,* 1996, vol. 7 (1), 1-8
- **USTER, M ; LOELIGER, T ; GUGGENBÜHL, W ; JÄCKEL, H.** Integrating ADC Using a Single Transistor as Integrator and Amplifier for Very Low (1fA Minimum) Input Currents. *Advanced A/D and D/A Conversion Techniques and Their Applications, Konferenz der Universität Strathclyde (Großbritannien,* 1999, vol. 466, 86-89